# EUROPEAN PATENT APPLICATION

(11) **EP 4 660 242 A1**
(43) Date of publication of application: **10.12.2025**
(21) Application number: 24750369.1
(22) Date of filing: 31.01.2024
(51) Int. Cl.: C08L 63/00, C08G 59/20, C08G 59/40, C08G 59/50, C08K 3/013, C08K 3/20, C08K 3/22, C08K 5/17, C08K 5/103, C09J 9/00, C09J 11/04, C09J 11/06, C09J 163/00, C09J 201/00, C09K 5/14, H01M 10/613, H01M 10/625, H01M 10/653, H01M 10/6554

(54) **THERMALLY CONDUCTIVE RESIN COMPOSITION AND THERMALLY CONDUCTIVE MEMBER**

(30) Priority: 31.01.2023 JP 2023013583; 31.01.2023 JP 2023013584; 08.03.2023 JP 2023035923; 31.03.2023 JP 2023059573; 31.03.2023 JP 2023059531
(71) Applicant: Sekisui Chemical Co., Ltd., Osaka-shi, Osaka 530-8565 (JP)
(72) Inventor: KOBAYASHI, Yusuke, Mishima-gun, Osaka 618-0021 (JP); FURUKAWA, Atsushi, Mishima-gun, Osaka 618-0021 (JP); IWAMOTO, Tatsuya, Mishima-gun, Osaka 618-0021 (JP); YOSHIOKA, Tetsuro, Mishima-gun, Osaka 618-0021 (JP)
(74) Representative: Ter Meer Steinmeister & Partner
(86) International application number: PCT/JP2024/003187
(87) International publication number: WO 2024/162420

(57) **Abstract**

A thermally conductive resin composition comprising an epoxy resin, an amine curing agent having three or more active hydrogen atoms of an amino group, and a thermally conductive filler, and having an equivalent ratio of the active hydrogen atoms of the amino group to an epoxy group of more than 1 and less than 2.7.

## Description

### Technical Field

The present invention relates to a thermally conductive resin composition and a thermally conductive member for use in battery assemblies and the like.

### Background Art

Thermally conductive resin compositions that are curable and liquid are widely known, and, for example, such a thermally conductive resin composition is provided between a heating element and a heat dissipating element, then cured to form a cured product, and used as a thermally conductive member such as a heat dissipating gap filler for transferring heat produced by the heating element to the heat dissipating element.

In recent years, given the market backdrop of steadily growing production of electric vehicles, there has been an increasing demand for two-component, room temperature-curable, heat-dissipating gap fillers for lithium-ion batteries (LiBs). Specifically, in lithium-ion batteries, from the viewpoint of heat dissipation, a heat-dissipating gap filler is often provided between components such as battery cells, battery modules, and battery packs to fix the components in place and enhance heat dissipation.

As conventional thermally conductive resin compositions for LIBs, urethane-based resin compositions have been commonly used. However, urethane-based resin compositions have excessive adhesion, and are thus problematic in that deformation occurs when attempting to rework the components due to insufficient strength of cooling plates or the like, thus making it impossible to reuse the reworked components.

In recent years, the use of epoxy-based resins as thermally conductive resin compositions for LIBs has also been studied. For example, as disclosed in Patent Literature 1, an epoxy resin-based resin composition containing a tri- or higher functional epoxy resin not having an aromatic skeleton, a bi- or lower functional liquid epoxy resin, a curing agent, a silane compound not having a functional group other than an alkoxy group, and a thermally conductive filler is known.

### Citation List

### Patent Literature

PTL1: JP 2022-116587 A

### Summary of Invention

### Technical Problem

However, the conventional epoxy resin-based thermally conductive resin composition disclosed in Patent Literature 1 is not described as being capable of exhibiting improved elongation while having improved adhesion.

Accordingly, an object of the present invention is to provide a thermally conductive resin composition capable of exhibiting improved elongation while suppressing deterioration of adhesion to resin materials such as PET.

### Solution to Problem

As a result of having conducted diligent study, the present inventors found that the above problem can be solved by a thermally conductive resin composition containing an epoxy resin, an amine curing agent having three or more active hydrogen atoms of amino group, and a thermally conductive filler, and having an equivalent ratio of active hydrogen atoms of amino group to epoxy groups within a specific range, and accomplished the present invention. That is to say, the present invention provides [1] to [18] below.

[1] A thermally conductive resin composition comprising an epoxy resin, an amine curing agent having three or more active hydrogen atoms of amino group, and a thermally conductive filler, and having an equivalent ratio of active hydrogen atoms of amino group to epoxy groups of more than 1 and 2.7 or less.

[2] The thermally conductive resin composition according to [1], wherein the amine curing agent has a primary amino group.

[3] The thermally conductive resin composition according to [2], wherein the amine curing agent has two or more primary amino groups per molecule.

[4] The thermally conductive resin composition according to any one of [1] to [3], wherein the amine curing agent is an aliphatic amine.

[5] The thermally conductive resin composition according to any one of [1] to [4], wherein the epoxy resin comprises an epoxy resin having an aromatic ring.

[6] The thermally conductive resin composition according to any one of [1] to [5], wherein the epoxy resin comprises a polyfunctional epoxy resin and a monofunctional epoxy resin.

[7] The thermally conductive resin composition according to any one of [1] to [6], wherein the thermally conductive filler has a filling rate of 50% by volume or more.

[8] The thermally conductive resin composition according to any one of [1] to [7], wherein the thermally conductive filler is at least one of aluminum oxide or aluminum hydroxide.

[9] The thermally conductive resin composition according to any one of [1] to [8], wherein the thermally conductive filler comprises aluminum oxide and aluminum hydroxide, the aluminum oxide has a filling rate of 4% by volume or more and 50% by volume or less, and the aluminum hydroxide has a filling rate of 25% by volume or more and 86% by volume or less.

[10] The thermally conductive resin composition according to any one of [1] to [9], wherein the epoxy resin has a molecular weight of 1000 or less, and the amine curing agent has a molecular weight of 3000 or less.

[11] The thermally conductive resin composition according to any one of [1] to [10], which has the equivalent ratio of the active hydrogen atoms of amino group to the epoxy groups of 1.05 or more.

[12] The thermally conductive resin composition according to any one of [1] to [11], which has the equivalent ratio of the active hydrogen atoms of amino group to the epoxy groups of 1.12 or more and 2.63 or less.

[13] The thermally conductive resin composition according to any one of [1] to [12], which has the equivalent ratio of the active hydrogen atoms of amino group to the epoxy groups of 1.78 or less.

[14] The thermally conductive resin composition according to any one of [1] to [13], comprising a first agent which comprises the epoxy resin and with which a first container is filled and a second agent which comprises the amine curing agent and with which a second container is filled.

[15] A container set, which is filled with the thermally conductive resin composition according to [14], and comprises the first container filled with the first agent and the second container filled with the second agent.

[16] A thermally conductive member formed of a cured product of the thermally conductive resin composition according to any one of [1] to [14].

[17] A battery assembly comprising the thermally conductive member according to [16].

[18] Use of the thermally conductive resin composition according to any one of [1] to [14] as at least one of a gap filler between battery cells, a gap filler between a battery cell and a module housing, a gap filler between a battery module and a battery pack housing, or a gap filler between a battery cell and a battery pack housing.

### Advantageous Effects of Invention

The present invention provides a thermally conductive resin composition capable of exhibiting improved elongation while suppressing deterioration of adhesion to resin materials such as PET.

### Brief Description of Drawings

[Fig. 1] Fig. 1 is a schematic diagram showing a container set according to one embodiment.
[Fig. 2] Fig. 2 is a schematic diagram showing a container set according to another one embodiment.
[Fig. 3] Fig. 3 is a perspective diagram showing a representative configuration of a battery module according to the present invention.
[Fig. 4] Fig. 4 is a perspective diagram showing a representative configuration of a battery cell contained in a battery module.
[Fig. 5] Fig. 5 is a perspective diagram showing a battery assembly having a cell-to-pack structure.

### Description of Embodiments

### [Thermally conductive resin composition]

Below, the thermally conductive resin composition of the present invention will now be described in detail.

The thermally conductive resin composition of the present invention contains an epoxy resin, an amine curing agent having three or more active hydrogen atoms of amino group, and a thermally conductive filler, and has an equivalent ratio of active hydrogen atoms of amino group to epoxy groups of more than 1 and 2.7 or less.

The thermally conductive resin composition having the above configuration has increased adhesion to resin materials such as polyethylene terephthalate (PET) and also exhibits improved elongation after being cured.

### <Equivalent ratio>

The thermally conductive resin composition of the present invention has an equivalent ratio of active hydrogen atoms of amino group to epoxy groups (hereinafter also referred to as an equivalent ratio (NH/Ep)) of more than 1 and 2.7 or less. When the equivalent ratio (NH/Ep) is 1 or less or when more than 2.7, adhesion to resin materials such as PET is impaired, or elongation of the thermally conductive resin composition is impaired.

While the underlying principle is not clear, it is presumed to be as follows. That is to say, when the equivalent ratio (NH/Ep) is 1 or less, a large number of epoxy groups that are present in an excess react with amino groups that in general likely lead to a high crosslinking density, thus possibly resulting in a formulation that unlikely exhibits elongation. Also, epoxy groups that remain because they are present in an excess have a relatively low polarity, and are thus not expected to provide the effect of enhancing adhesion to resin substrates such as PET. Moreover, after curing, no active hydrogen (NH) may remain or only a trace amount of active hydrogen may remain. Accordingly, adhesion to resin materials such as PET that do not have a polar group cannot be sufficiently increased, or sufficient elongation cannot be ensured. In addition, when the equivalent ratio (NH/Ep) exceeds 2.7, there will be a large amount of uncured components after curing, and the uncured components inhibit bonding or hinder elongation.

As for a combination of an epoxy resin and a curing agent in general, the equivalent ratio (NH/Ep) from the viewpoint of simultaneously achieving adhesion to resin materials such as PET and elongation of the thermally conductive resin composition is preferably 1.05 or more, more preferably 1.1 or more, more preferably 1.12 or more, more preferably 1.2 or more, and even more preferably 1.4 or more. Also, the equivalent ratio (NH/Ep) is preferably 2.7 or less, more preferably 2.63 or less, more preferably 2.6 or less, more preferably 2.5 or less, more preferably 2.4 or less, more preferably 2.2 or less, more preferably 2.18 or less, more preferably 1.8 or less, more preferably 1.6 or less, more preferably 1.5 or less, and even more preferably 1.47 or less.

Accordingly, the equivalent ratio (NH/Ep) is preferably 1.05 to 2.7, more preferably 1.1 to 2.7, more preferably 1.12 to 2.63, more preferably 1.1 to 2.6, even more preferably 1.1 to 2.5, even more preferably 1.1 to 2.2, even more preferably 1.12 to 2.18, even more preferably 1.12 to 1.78, and even more preferably 1.12 to 1.47.

When the thermally curable resin composition has a content of a tri- or higher functional epoxy resin of less than 10% by mass and a content of an amine curing agent having two primary amino groups and further having one or more reactive amino groups per molecule of 30% by mass or more (hereinafter also referred to as condition 1), the equivalent ratio (NH/Ep) from the viewpoint of, for example, enhancing adhesion or the like is preferably more than 1, more preferably 1.05 or more, more preferably 1.1 or more, more preferably 1.12 or more, more preferably 1.2 or more, more preferably 1.4 or more, and even more preferably 1.5 or more. In the case of condition 1, the equivalent ratio (NH/Ep) from the viewpoint of, for example, enhancing adhesion is preferably 2.7 or less, more preferably 2.63 or less, more preferably 2.6 or less, more preferably 2.5 or less, more preferably 2.4 or less, even more preferably 2.2 or less, and yet more preferably 2.18 or less. Accordingly, the equivalent ratio (NH/Ep) in condition 1 is preferably 1.05 to 2.7, more preferably 1.12 to 2.63, more preferably 1.2 to 2.6, more preferably 1.4 to 2.5, and even more preferably 1.5 to 2.18.

Here, the phrase "a content of a tri- or higher functional epoxy resin of less than 10% by mass" means that less than 10% by mass of all epoxy resins contained in the thermally conductive resin composition are tri- or higher functional epoxy resins (i.e., having three or more epoxy groups per molecule), and also encompasses a case of 0% by mass, i.e., no tri- or higher functional epoxy groups are contained.

Also, the phrase "a content of an amine curing agent having two primary amino groups and further having one or more reactive amino groups per molecule of 30% by mass or more" means that 30% by mass or more of all amine curing agents contained in the thermally conductive resin composition, in addition to having two primary amino groups, further have one or more reactive amino groups per molecule. Here, the reactive amino group is an amino group having an active hydrogen group, and may be a primary amino group or a secondary amino group. The following conditions 2 to 4 shall be interpreted likewise, and similar phrases shall also be interpreted accordingly.

When the thermally curable resin composition has a content of a tri- or higher functional epoxy resin of 10% by mass or more and a content of an amine curing agent having two primary amino groups and further having one or more reactive amino groups per molecule of less than 30% by mass (hereinafter also referred to as condition 2), the equivalent ratio (NH/Ep) from the viewpoint of, for example, enhancing adhesion is preferably more than 1, more preferably 1.05 or more, even more preferably 1.1 or more, and yet more preferably 1.12 or more. In the case of condition 2, the equivalent ratio (NH/Ep) from the viewpoint of, for example, enhancing adhesion and elongation is preferably 2 or less, more preferably 1.8 or less, more preferably 1.78 or less, even more preferably 1.6 or less, and yet more preferably 1.47 or less. Accordingly, the equivalent ratio (NH/Ep) in the case of condition 2 is preferably more than 1 and 2 or less, more preferably 1.05 to 1.8, even more preferably 1.1 to 1.8, even more preferably 1.12 to 1.78, even more preferably 1.12 to 1.6, and yet more preferably 1.12 to 1.47.

When the thermally curable resin composition has a content of a tri- or higher functional epoxy resin of 10% by mass or more and a content of an amine curing agent having two primary amino groups and further having one or more reactive amino groups per molecule of 30% by mass or more (hereinafter also referred to as condition 3), the equivalent ratio (NH/Ep) is preferably more than 1, more preferably 1.05 or more, and even more preferably 1.10 or more. In condition 3, the equivalent ratio (NH/Ep) is preferably 2.70 or less, more preferably 2.60 or less, and even more preferably 2.50 or less. Accordingly, the equivalent ratio (NH/Ep) in condition 3 is preferably more than 1 and 2.70 or less, more preferably 1.05 to 2.60, and even more preferably 1.10 to 2.50.

When the thermally curable resin composition has a content of a tri- or higher functional epoxy resin of less than 10% by mass and a content of an amine curing agent having two primary amino groups and further having one or more reactive amino groups per molecule of less than 30% by mass (hereinafter also referred to as condition 4), the equivalent ratio (NH/Ep) is preferably more than 1, more preferably 1.05 or more, and even more preferably 1.10 or more. In condition 4, the equivalent ratio (NH/Ep) is preferably 2.00 or less, more preferably 1.80 or less, and even more preferably 1.60 or less. Accordingly, the equivalent ratio (NH/Ep) in condition 4 is preferably more than 1 and 2.00 or less, more preferably 1.05 to 1.80, and even more preferably 1.10 to 1.60.

The equivalent ratio (NH/Ep) is synonymous with the ratio of the number of active hydrogen atoms of amino groups to the number of epoxy groups contained in the thermally conductive resin composition, and can be determined by calculating the equivalent of epoxy groups and the equivalent of active hydrogen atoms of amino groups as follows.

The equivalent of epoxy groups can be obtained by dividing the content (g) of the epoxy resin contained in the thermally conductive resin composition by the epoxy equivalent (g/eq). Note that when two or more kinds of epoxy resin are contained, the equivalent of epoxy groups can be obtained by summing the values obtained by dividing the content (g) of each epoxy resin by the epoxy equivalent (g/eq).

The equivalent of active hydrogen atoms of amino groups can be obtained by dividing the amine content (g) in the thermally conductive resin composition by the active hydrogen equivalent (g/eq) of amine. Note that when two or more kinds of amine are contained, the equivalent of active hydrogen atoms of amino groups can be obtained by summing the values obtained by dividing the content (g) of each amine by the active hydrogen equivalent (g/eq).

The epoxy equivalent (g/eq) can be obtained by dividing the molecular weight of the epoxy resin by the number of epoxy groups per molecule. The active hydrogen equivalent (g/eq) can be obtained by dividing the molecular weight of amine by the number of active hydrogen atoms per molecule. The molecular weight, the number of epoxy groups, and the number of active hydrogen atoms can be measured using a mass spectrometer (GC-MS or LC-MS). When only the molecular weight can be determined using a mass spectrometer, the number of epoxy groups and the number of active hydrogen atoms per molecule can be determined using NMR (such as 1H NMR) or the like. Note that, when the sample is a mixture, NMR is preferably performed after the components are separated by GPC (gel permeation chromatography) or HPLC (high performance liquid chromatography).

When the structural formula of the epoxy resin is known, the molecular weight and the number of epoxy groups are the molecular weight and the number of epoxy groups of the epoxy resin that can be calculated from the structural formula, respectively. Also, when the structural formula of the amine is known, the molecular weight and the number of active hydrogen atoms are the molecular weight and the number of active hydrogen atoms of the amine that can be calculated from the structural formula, respectively.

The number of active hydrogen atoms in the amine shall be 1 in NHR₂ (secondary amino group) and 2 in NH₂R (primary amino group) (provided that, in NHR₂ and NH₂R, R is a functional group other than active hydrogen, i.e., a part of the amine other than NH or NH₂).

### [Epoxy resin]

The thermally conductive resin composition of the present invention contains an epoxy resin. Due to the epoxy resin contained in the thermally conductive resin composition, the adhesion of the thermally conductive resin composition is readily regulated to a suitable range. The epoxy resin is a compound having one or more epoxy groups. The epoxy resin may be a polyfunctional epoxy resin having two or more epoxy groups, or a monofunctional epoxy resin having one epoxy group.

The thermally conductive resin composition of the present invention preferably contains at least a polyfunctional epoxy resin. Due to the polyfunctional epoxy resin contained in the thermally conductive resin composition, crosslinks can be suitably formed, and adhesive strength is readily increased.

More preferably, the thermally conductive resin composition further contains a monofunctional epoxy resin in addition to the polyfunctional epoxy resin. Due to the monofunctional epoxy resin further contained in the thermally conductive resin composition, an excessive crosslinking density after curing is prevented, and thus elongation is readily enhanced. Also, when the monofunctional epoxy resin is used, the viscosity of the thermally conductive resin composition before being cured can be readily lowered. Moreover, when the monofunctional epoxy resin is used, regulating the equivalent ratio (NH/Ep) to the desired range enables the mass ratio of the epoxy resin to the amine curing agent to be 1:1 or close to 1:1. Accordingly, in a two-component curable type, it also enables the mixing ratio of the first agent to the second agent to be 1:1 or close to 1:1.

Note that, when the crosslinking density is controlled by other means such as the use of a curing agent in which the number of active hydrogen atoms per molecule is small (for example, a diamine having two primary amino groups), elongation can be readily enhanced without using a monofunctional epoxy resin.

When a polyfunctional epoxy resin and a monofunctional epoxy resin are used in combination, the mass ratio of the monofunctional epoxy resin to the polyfunctional epoxy resin (monofunctional/polyfunctional) is preferably 10/90 or more and 90/10 or less, more preferably 15/85 or more and 75/25 or less, and even more preferably 25/75 or more and 50/50 or less.

The polyfunctional epoxy resin may be a bifunctional or trifunctional epoxy resin, and a bifunctional epoxy resin is preferably used. A bifunctional epoxy resin and a trifunctional epoxy resin are also preferably used in combination. When a trifunctional epoxy resin is used, the reactive site of epoxy groups readily forms crosslinks, and adhesive strength is likely enhanced.

When the epoxy resin contains a trifunctional epoxy resin, the content of the trifunctional epoxy resin is preferably 10% by mass or more and more preferably 30% by mass or more, and may be 100% by mass or less and is preferably 70% by mass or less, and more preferably 50% by mass or less, based on all epoxy resins contained in the thermally conductive resin composition.

Specific examples of the polyfunctional epoxy resin include, but are not limited to, epoxy resins having an aromatic ring, such as phenol novolac epoxy resins, resorcinol epoxy resins, epoxy resins having a bisphenol skeleton, epoxy resins having a naphthalene skeleton, epoxy resins having a fluorene skeleton, epoxy resins having a biphenyl skeleton, epoxy resins having a bi(glycidyloxyphenyl)methane skeleton, epoxy resins having a xanthene skeleton, epoxy resins having an anthracene skeleton, and epoxy resins having a pyrene skeleton.

Also, examples include epoxy resins having an alicyclic skeleton, such as epoxy resins having a dicyclopentadiene skeleton and epoxy resins having an adamantane skeleton.

Examples further include aliphatic epoxy resins, e.g., alkyldiol diglycidyl ethers such as butanediol diglycidyl ether and neopentyl glycol diglycidyl ether. Other than those set forth above, examples of the aliphatic epoxy resins include alkyl polyol polyglycidyl ethers other than alkyl diol diglycidyl ethers, such as trimethylolpropane polyglycidyl ether. Examples also include polyalkylene glycol diglycidyl ethers such as polytetramethylene glycol diglycidyl ether, polyethylene glycol diglycidyl ether, and polypropylene glycol diglycidyl ether.

In addition, hydrogenated or modified products of the epoxy resins exemplified above can also be used as epoxy resins.

Examples of the epoxy resins having a bisphenol skeleton include epoxy resins having a bisphenol A, bisphenol F, or bisphenol S type bisphenol skeleton.

Examples of the resorcinol epoxy resins include resorcinol diglycidyl ether.

Examples of the epoxy resins having a naphthalene skeleton include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of the epoxy resins having a fluorene skeleton include 9,9-bis(4-glycidyloxyphenyl)fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl)fluorene, 9,9-bis(4-glycidyloxy-3,5-dimethylphenyl)fluorene, 9,9-bis(4-glycidyloxy-3,5-dichlorophenyl)fluorene, and 9,9-bis(4-glycidyloxy-3,5-dibromophenyl)fluorene.

Examples of the epoxy resins having a biphenyl skeleton include 4,4'-diglycidylbiphenyl and 4,4'-diglycidyl-3,3',5,5'-tetramethylbiphenyl. Examples of the epoxy resins having a bi(glycidyloxyphenyl)methane skeleton include 1,1'-bi(2,7-glycidyloxynaphthyl)methane, 1,8'-bi(2,7-glycidyloxynaphthyl)methane, 1,1'-bi(3,7-glycidyloxynaphthyl)methane, 1,8'-bi(3,7-glycidyloxynaphthyl)methane, 1,1'-bi(3,5-glycidyloxynaphthyl)methane, 1,8'-bi(3,5-glycidyloxynaphthyl)methane, 1,2'-bi(2,7-glycidyloxynaphthyl)methane, 1,2'-bi(3,7-glycidyloxynaphthyl)methane, and 1,2'-bi(3,5-glycidyloxynaphthyl)methane.

Examples of the epoxy resins having a xanthene skeleton include 1,3,4,5,6,8-hexamethyl-2,7-bis-glycidylmethoxy-9-phenyl-9H-xanthene. Examples of the epoxy resins having an anthracene skeleton include those having one or more anthracene skeletons and two or more epoxy groups or glycidyl groups per molecule.

Examples of the epoxy resins having a pyrene skeleton include those having one or more pyrene skeletons and two or more epoxy groups or glycidyl groups per molecule.

Examples of the epoxy resins having a dicyclopentadiene skeleton include dicyclopentadiene dioxide and phenol novolac epoxy resins having a dicyclopentadiene skeleton. Examples of the epoxy resins having an adamantane skeleton include 1,3-bis(4-glycidyloxyphenyl)adamantane and 2,2-bis(4-glycidyloxyphenyl)adamantane.

Among the above polyfunctional epoxy resins, from the viewpoint of enhancing adhesive strength and mechanical strength, epoxy resins having an aromatic ring are preferable, in particular, epoxy resins having a phenyl group are more preferable, and, in particular, bisphenol-type epoxy resins that are epoxy resins having a bisphenol skeleton are even more preferable. Aliphatic epoxy resins such as alkyl polyol polyglycidyl ethers are also preferable, and an aliphatic epoxy resin and an epoxy resin having an aromatic ring are also preferably used in combination.

One polyfunctional epoxy resin may be used singly, or two or more may be used in combination.

Examples of the monofunctional epoxy resin include monofunctional epoxy resins having an aromatic ring such as phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene. The monofunctional epoxy resin having an aromatic ring is more preferably an epoxy resin having a phenyl group.

The monofunctional epoxy resin, from the viewpoint of high safety of feedstocks, is also preferably an aliphatic monofunctional epoxy resin, and specific examples include glycidyl ethers of aliphatic alcohols. Here, the aliphatic alcohol may have a branched structure or a linear structure and, from the viewpoint of enhancing elongation, preferably has a linear structure. The aliphatic alcohol may have, for example, about 4 to 24 carbon atoms and, from the viewpoint of enhancing elongation, preferably has 10 to 20 carbon atoms. From the viewpoint of enhancing elongation, the aliphatic alcohol is preferably a saturated aliphatic alcohol. Specific examples of the glycidyl ethers of aliphatic alcohols include butyl glycidyl ether, decyl glycidyl ether, lauryl glycidyl ether, myristyl glycidyl ether, cetyl glycidyl ether, and stearyl glycidyl ether. The monofunctional epoxy resin may be different from those described above, and examples include monofunctional epoxy resins having a glycidyl group but not having an ether group such as 1,2-epoxybutane or propylene oxide.

The monofunctional epoxy resin to be used, from the viewpoint of enhancing elongation, is preferably an aliphatic monofunctional epoxy resin, and, in particular, is preferably a glycidyl ether of an aliphatic alcohol.

One monofunctional epoxy resin may be used singly, or two or more may be used in combination.

The epoxy resin preferably contains an epoxy resin having an aromatic ring or, in particular, a phenyl group. The epoxy resin having an aromatic ring such as a phenyl group may be a monofunctional epoxy resin, or may be a polyfunctional epoxy resin. The aromatic ring or, in particular, the phenyl group has a stacking structure after curing, and thus facilitates formation of a pseudo-crosslinked structure by the epoxy resin in the cured product. Accordingly, the mechanical strength is likely increased, and the adhesion is likely increased as well. Preferably, the epoxy resin contains a polyfunctional epoxy resin, and the polyfunctional epoxy resin has an aromatic ring or, in particular, a phenyl group.

The epoxy resin having a molecular weight of, for example, 2000 or less, preferably 1000 or less, and more preferably 500 or less may be used. By using an epoxy resin having a certain molecular weight value or less, the viscosity of the thermally conductive resin composition can be lowered, and the thermally conductive filler can be highly packed. The molecular weight of the epoxy resin is, for example, 100 or more, preferably 150 or more, more preferably 200 or more, and even more preferably 250 or more. By regulating the molecular weight of the epoxy resin to a specific value or higher, an unnecessarily high crosslinking density can be prevented, and elongation is readily enhanced. The epoxy resin is preferably liquid at room temperature (25°C).

The epoxy equivalent of the epoxy resin is preferably 1000 g/eq or less, more preferably 500 g/eq or less, and even more preferably 375 g/eq or less, and is preferably 100 g/eq or more, more preferably 125 g/eq or more, and even more preferably 140 g/eq or less.

### [Amine curing agent]

The thermally conductive resin composition of the present invention contains an amine curing agent having three or more active hydrogen atoms of amino group (hereinafter, also simply referred to as an "amine curing agent"). The amine curing agent is a component that reacts with the epoxy resin to cure the thermally conductive resin composition. By containing the amine curing agent, the thermally conductive resin composition can be readily regulated to a practical curing speed at room temperature. In addition, by having three or more active hydrogen atoms of amino group, the amine curing agent readily forms crosslinks, active hydrogen atoms likely remain, and thus a certain level of or greater adhesion to resin materials and elongation of the thermally conductive resin composition can be readily attained.

The number of active hydrogen atoms of amino group contained in the amine curing agent may be 3 or more per molecule, and is preferably 4 or more, more preferably 5 or more, and even more preferably 6 or more. The number of active hydrogen atoms of amino group per molecule contained in the amine curing agent is not particularly limited, and may be, for example, 12 or less, and is preferably 10 or less and more preferably 8 or less.

The amino group contained in the amine curing agent may be a primary amino group or a secondary amino group and, from the viewpoint of reactivity and a curing speed, the amine curing agent preferably has a primary amino group. The amine curing agent preferably has two or more primary amino groups per molecule, more preferably has two primary amino groups and further has one or more reactive amino groups per molecule, and, in particular, even more preferably has three or more primary amino groups per molecule. By having two or more primary amino groups, especially two primary amino groups and two or more reactive amino groups, and, in particular, three or more primary amino groups, the amine curing agent can provide an increased curing speed and form a crosslinked structure suitable for a cured product.

Note that, by having two primary amino groups and further having one or more reactive amino groups (in particular, by having three or more primary amino groups) per molecule, the amine curing agent readily forms a branched structure and also readily forms crosslinks even when the equivalent ratio (NH/Ep) is high. The number of primary amino groups in the amine curing agent per molecule is, for example, 6 or less, preferably 5 or less, and more preferably 4 or less. From the viewpoint of suppressing excessive crosslinking and achieving a suitable curing speed, the number of primary amino groups is also preferably 2 or 3.

When an amine curing agent having three or more primary amino groups is used, the content of the amine curing agent having three or more primary amino groups is preferably 30% by mass or more, is more preferably 50% by mass or more, and may be 100% by mass or less, based on all amines contained in the thermally conductive resin composition.

In the present invention, from the viewpoint of achieving a suitable curing speed, forming a suitable crosslinked structure, and imparting suitable elongation, it is preferable to use at least any of a trifunctional epoxy resin as the polyfunctional epoxy resin (A) and an amine having three or more (in particular, three) primary amino groups as the amine curing agent (B). When a trifunctional epoxy resin is used as the polyfunctional epoxy resin (A), an amine having two amino groups per molecule is preferably used as the amine curing agent (B) from the viewpoint of a suitable curing speed and crosslinking density. Similarly, when a bifunctional epoxy resin is used as the polyfunctional epoxy resin (A), an amine having three or more (in particular, three) amino groups per molecule is preferably used as the amine curing agent (B) from the viewpoint of a suitable curing speed and crosslinking density.

Examples of the amine curing agent include polyamines such as diamines and triamines. Also, the amine curing agent may be an aliphatic amine or an aromatic ring-containing amine. Specific examples of the aliphatic amine include, but are not limited to, polyoxyalkylene polyamines such as polyoxyethylene diamine, poly(oxyethylene/oxypropylene) diamine, polyoxypropylene diamine, poly(oxybutylene/oxypropylene) diamine, polyethylene glycol bis(propylamine), trimethylolpropane poly(oxypropylene)triamine, glyceryl poly(oxypropylene)triamine; branched or linear alkanediamines such as 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,5-diaminopentane, 2-methyl-1,8-octanediamine, 2-methyl-1,9-nonanediamine, and 2,7-dimethyl-1,8-octanediamine; and alicyclic polyamines such as 1,3-bis(aminomethyl)cyclohexane, 1,4-bis(aminomethyl)cyclohexane, cyclohexanediamine, methylcyclohexanediamine, and isophoronediamine.

The aromatic ring-containing amine may be, but is not limited to, an aromatic amine in which an amino group is directly bonded to an aromatic ring, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, 3,5-diethyltolylene-2,6-diamine, biphenylenediamine, 4,4-diaminodiphenylmethane, 2,5-naphthylenediamine, or 2,6-naphthylenediamine, or an amine in which an amino group is not directly bonded to an aromatic ring, such as m-xylylenediamine, p-xylylenediamine, or a reaction product of m-xylylenediamine and styrene.

The amine curing agent may be polyamidoamine, ester amine, or the like.

Among the above amine curing agents, from the viewpoint of increasing the curing rate, aliphatic amines are preferable, in particular, polyoxyalkylene polyamines and branched or linear alkane diamines are more preferable, and from the viewpoint of further enhancing elongation, polyoxyalkylene polyamines are even more preferable.

One amine curing agent may be used singly, or two or more may be used in combination.

The molecular weight of the amine curing agent is not particularly limited, may be, for example, 5000 or less, and is preferably 3000 or less, more preferably 1000 or less, and even more preferably 600 or less. By using an amine curing agent having a certain molecular weight value or less, the viscosity of the thermally conductive resin composition can be lowered, and also the thermally conductive filler can be highly packed.

The amine curing agent having a molecular weight of, for example, 100 or more, preferably 110 or more, more preferably 200 or more, and even more preferably 300 or more may be used. By regulating the molecular weight of the amine curing agent to a certain value or higher, an unnecessarily high crosslinking density can be prevented, and elongation and adhesion are readily enhanced. The amine curing agent is preferably liquid at room temperature (25°C).

The molecular weights of the amine curing agent and the epoxy resin can be measured by, for example, a mass spectrometer (GC-MS or LC-MS).

The active hydrogen equivalent of the amine curing agent is not particularly limited, and is, for example, 15 g/eq or more, preferably 25 g/eq or more, and more preferably 40 g/eq or more, and is, for example, 1000 g/eq or less, preferably 600 g/eq or less, and more preferably 300 g/eq or less.

At least any of the amine curing agent and the epoxy resin preferably has a phenyl group. When at least any of the amine curing agent and the epoxy resin has a phenyl group, a pseudo-crosslinked structure is formed, and the mechanical strength and the adhesion of the thermally conductive resin composition are readily increased.

The total amount (filling rate) of the amine curing agent and the epoxy resin is preferably 8% by volume or more and 49% by volume or less based on the total volume of the thermally conductive resin composition. When the amount is at the lower limit or above, the thermally conductive filler can be suitably dispersed in the thermally conductive resin composition. Also, the viscosity of the thermally conductive resin composition can be prevented from becoming unnecessarily high. When the amount is at the upper limit or below, a certain amount or more of the thermally conductive filler is readily contained in the thermally conductive resin composition. The total amount of the amine curing agent and the epoxy resin in the thermally conductive resin composition is more preferably 12% by volume or more and 29% by volume or less, even more preferably 14% by volume or more and 24.5% by volume or less, and even more preferably 15% by volume or more and 23.5% by volume or less.

The thermally conductive resin composition of the present invention may contain an amine having two or fewer active hydrogen atoms of amino group (hereinafter also referred to as a further amine) as long as the effects of the present invention are provided. Examples of the further amine include monoamines having only one primary amino group and diamines having two secondary amino groups. Specific examples include, but are not limited to, methoxypoly(oxyethylene/oxypropylene)-2-propylamine, diglycolamine, N-methylethanolamine, 3-butoxypropanolamine, ethylene glycolamine, propylene glycolamine, polyamidoamine, and ester amine. An example of the ester amine may be 1,5-bis[1,2-bis(ethoxycarbonyl)ethylamino]-2-methylpentane, and a commercially available product may be "Daitocurar E-6347" manufactured by Daito Sangyo Co., Ltd.

From the viewpoint of lowering the viscosity of the thermally conductive resin composition, the further amine is preferably liquid at 25°C.

One further amine may be used singly, or two or more may be used in combination.

The amount of the further amine may be smaller than that of the amine curing agent having three or more active hydrogen atoms of amino group. Specifically, the ratio of the number of active hydrogen atoms of the further amine to the number of active hydrogen atoms of the amine curing agent contained in the thermoplastic conductive resin composition (further amine/amine curing agent) may be small, and is specifically, for example, 0.8 or less, preferably 0.5 or less, more preferably 0.3 or less, and even more preferably 0.1 or less. The lower limit of the ratio (further amine/amine curing agent) is not particularly limited, and is 0.

Note that the number of active hydrogen atoms of the amine curing agent as referred to herein is the number of active hydrogen atoms of the amine curing agent contained in the entirety of the thermoplastic resin composition. The same also applies to the number of active hydrogen atoms of the further amine.

### [Thermally conductive filler]

The thermally conductive resin composition of the present invention contains a thermally conductive filler. Due to the thermally conductive filler contained in the thermally conductive resin composition, the thermal conductivity of the thermally conductive resin composition is enhanced.

Examples of the thermally conductive filler include metals, metal oxides, metal nitrides, metal hydroxides, carbon materials, and non-metal oxides, nitrides, and carbides. The form of the thermally conductive filler may be spherical or a powder having an indefinite shape.

Examples of metals in the thermally conductive filler include aluminum, copper, and nickel, examples of metal oxides include aluminum oxide represented by alumina, magnesium oxide, and zinc oxide, and examples of metal nitrides include aluminum nitride. The metal hydroxide may be aluminum hydroxide. The carbon material may be nodular graphite. Examples of non-metal oxides, nitrides, and carbides include quartz, boron nitride, and silicon carbide. Among these, from the viewpoint of ensuring insulating properties, metal oxides, metal nitrides, metal hydroxides, carbon materials, and non-metal oxides, nitrides, and carbides are preferable, and, in particular, metal oxides and metal hydroxides are more preferable.

Among the above examples, aluminum oxide is preferable from the viewpoint of enhancing the heat dissipating properties of the thermally conductive member, and aluminum hydroxide is preferable when enhancing flame retardancy or when lowering the specific gravity of the inorganic filler to reduce the weight of the thermally conductive resin composition.

One thermally conductive filler may be used singly, or two or more may be used in combination.

The average particle size of the thermally conductive filler is preferably 0.1 µm or more and 200 µm or less, more preferably 0.5 µm or more and 150 µm or less, and even more preferably 1 µm or more and 110 µm or less.

The thermally conductive filler is preferably a combination of a small particle size thermally conductive filler having an average particle size of 0.1 µm or more and 5 µm or less and a large particle size thermally conductive filler having an average particle size of more than 5 µm and 200 µm or less. By using thermally conductive fillers having different average particle sizes, the filling rate can be increased.

The average particle size of thermally conductive fillers can be measured by observation under an electron microscope or the like. More specifically, for example, the particle sizes of randomly selected 50 thermally conductive filler particles are measured using an electron microscope or an optical microscope, and the average (arithmetic mean) thereof can be taken as the average particle size.

The content (filling rate) of the thermally conductive filler in the thermally conductive resin composition is preferably 50% by volume or more based on the total volume of the thermally conductive resin composition. When the content is at the lower limit or above, a certain level of thermal conductivity can be imparted to the thermally conductive resin composition. From the viewpoint of further enhancing thermal conductivity, the content is more preferably 70% by volume or more, even more preferably 72% by volume or more, and yet more preferably 75% by volume or more.

The content of the thermally conductive filler in the thermally conductive resin composition is preferably 90% by volume or less based on the total volume of the thermally conductive resin composition. By regulating the content of the thermally conductive filler to the upper limit or below, the thermally conductive filler can be suitably dispersed in the thermally conductive resin composition, and also the viscosity of the thermally conductive resin composition can be prevented from becoming unnecessarily high. Also, the elongation of the thermally conductive resin composition is readily enhanced. From these viewpoints, the content of the thermally conductive filler in the thermally conductive resin composition is more preferably 85% by volume or less, even more preferably 80% by volume or less, and even more preferably 79% by volume or less.

The content of the thermally conductive filler in the thermally conductive resin composition is not particularly limited and, when expressed in part by mass, is preferably 300 parts by mass or more and 3000 parts by mass or less, more preferably 500 parts by mass or more and 2000 parts by mass or less, even more preferably 600 parts by mass or more and 1800 parts by mass or less, and yet more preferably 800 parts by mass or more and 1500 parts by mass or less, based on total 100 parts by mass of the epoxy resin and the amine curing agent.

In order to lower the specific gravity of the composition for weight reduction and achieve a high thermal conductivity, aluminum oxide and aluminum hydroxide are preferably used in combination. In this case, the filling rate of aluminum oxide may be, for example, 4% by volume or more and 60% by volume or less, and is preferably 4% by volume or more and 50% by volume or less, based on the total volume of the thermally conductive resin composition. When the filling rate of aluminum oxide is at the upper limits or below, the specific gravity of the thermally conductive resin composition is lowered, and the weight is readily reduced. On the other hand, when at the lower limit or above, a certain level of thermal conductivity is readily ensured. From these viewpoints, the filling rate of aluminum oxide is more preferably 6% by volume or more and 40% by volume or less, and even more preferably 10% by volume or more and 30% by volume or less.

The filling rate of aluminum hydroxide may be, for example, 10% by volume or more and 86% by volume or less, and is preferably 25% by volume or more and 86% by volume or less, based on the total volume of the thermally conductive resin composition. When the amount of aluminum hydroxide is at the lower limits or less, thermal conductivity is enhanced, the specific gravity of the thermally conductive resin composition is lowered, and the weight is readily reduced. On the other hand, when at the upper limit or below, a certain amount or more of aluminum oxide is readily contained, and a certain level of thermal conductivity is readily ensured. From these viewpoints, the filling rate of aluminum hydroxide is more preferably 35% by volume or more and 75% by volume or less, and even more preferably 45% by volume or more and 65% by volume or less.

The filling rate of aluminum hydroxide may be, for example, 0.25 or more and 15 or less and is preferably higher than the filling rate of aluminum oxide, and the ratio of the filling rate of aluminum hydroxide to the filling rate of aluminum oxide is preferably more than 1 and 15 or less, more preferably 1.05 or more and 10 or less, and even more preferably 1.5 or more and 5 or less.

### (Dispersant)

The thermally conductive resin composition of the present invention may contain a dispersant. The dispersant may be a polymer-based dispersant. The polymer-based dispersant may be a polymer compound having a functional group. Examples of the polymer compound include acryl-based, vinyl-based, polyester-based, polyurethane-based, polyether-based, epoxy-based, polystyrene-based, amino-based, and silicone-based compounds. Examples of the functional group include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. A dispersant that is not a polymer dispersant may also be used and, for example, an alkoxysilane compound may also be used.

The content of the dispersant in the thermally conductive resin composition is preferably 0.1 parts by mass or more and 20 parts by mass or less, more preferably 0.2 parts by mass or more and 10 parts by mass or less, and even more preferably 0.4 parts by mass or more and 5 parts by mass or less, based on total 100 parts by mass of the epoxy resin and the amine curing agent.

### (Diluent)

The thermally conductive resin composition of the present invention may contain a diluent. The diluent is preferably liquid at ordinary temperature. The diluent is a non-reactive compound not having a functional group that is reactive with the epoxy resin and an amine such as the amine curing agent. By using a diluent, the viscosity of the thermally conductive resin composition can be lowered.

Examples of the diluent include fatty acid esters, e.g., esters of fatty acids and monohydric aliphatic alcohols, such as hexadecyl 2-ethylhexanoate, methyl laurate, isopropyl myristate, isopropyl palmitate, 2-ethylhexyl palmitate, octyldodecyl myristate, methyl stearate, butyl stearate, 2-ethylhexyl stearate, isotridecyl stearate, methyl caprate, methyl myristate, methyl oleate, isobutyl oleate, octyl oleate, lauryl oleate, myristyl myristate, 2-ethylhexyl oleate, decyl oleate, and isobutyl oleate. Among these, hexadecyl 2-ethylhexanoate is preferable.

The content of the diluent is not particularly limited, and is preferably 0.1 parts by mass or more and 10 parts by mass or less, more preferably 0.2 parts by mass or more and 5 parts by mass or less, and even more preferably 0.3 parts by mass or more and 3 parts by mass or less, based on total 100 parts by mass of the epoxy resin and the amine curing agent.

### (Other additives)

The thermally conductive resin composition of the present invention may contain additives other than those described above, and examples of such additives include curing catalysts that catalyze the reaction between the base resin and the curing agent, reaction rate control agents that suppress the reaction between the base resin and the curing agent, thixotropy imparting agents, flame retardants, antioxidants, and colorants.

### <Viscosity>

The thermally conductive resin composition of the present invention preferably has a viscosity measured at 25°C at 10 rpm of 500 Pa·s or less. By regulating the viscosity of the thermally conductive resin composition to 500 Pa·s or less, the thermally conductive resin composition can be easily applied to an adherend, and, for example, the time required for the application process with a dispenser can be shortened. The time required for the process of assembling battery modules and battery cells on the applied thermally conductive resin composition can also be shortened, and thus workability is enhanced. In addition, narrow gaps can be readily filled with the thermally conductive resin composition. The viscosity is more preferably 300 Pa·s or less, and even more preferably 250 Pa·s or less. The viscosity may be, for example, 10 Pa·s or more and, from the viewpoint of applying a certain amount or more of the thermally conductive filler to prevent dripping or the like, is preferably 20 Pa·s or more, and more preferably 40 Pa·s or more.

The viscosity of the thermally conductive resin composition is the viscosity before curing and, for example, in the case of a two-component type, the viscosity can be determined by measuring it immediately after mixing the first agent and the second agent.

### <Adhesion>

By having the configuration described above, the thermally conductive resin composition of the present invention has increased adhesion to resin materials such as PET. In particular, adhesion can be increased by optimizing the equivalent ratio (NH/Ep). Note that the optimal value of the equivalent ratio (NH/Ep) varies depending on the types of epoxy resin and amine curing agent used. In one aspect, an amine curing agent having two primary amino groups and further having one or more reactive amino groups per molecule may be used and, on the other hand, a tri- or higher epoxy resin may be not used, or even when used, such an epoxy resin is used in a small amount. In such a case, as the equivalent ratio (NH/Ep) is increased, the amount of residual NH groups remaining after the reaction is increased, thus adhesion is enhanced due to the influence of the polarity of the NH groups, and the crosslinking density after the reaction is also increased due to the amine curing agent. Accordingly, the optimal value of the equivalent ratio for increased adhesion is relatively large.

In another aspect, an amine curing agent having two primary amino groups and one or more reactive amino groups per molecule may be not used, or even when used, such an amine curing agent may be used in a small amount and, on the other hand, a tri- or higher functional epoxy resin may be used. In such a case, as the equivalent ratio (NH/Ep) is increased, the amount of residual NH groups remaining after the reaction is increased, thus adhesion is enhanced due to the influence of the polarity of the NH groups, but the amount of the epoxy resin that forms a crosslinked structure is relatively decreased, and the degree of crosslinking after the reaction is not increased. Accordingly, the optimal value of the equivalent ratio for increased adhesion is relatively small.

The adhesion of the thermally conductive resin composition to PET may be, for example, 0.70 MPa or more, and is preferably 1 MPa or more, more preferably 1.2 MPa or more, and even more preferably 1.4 MPa or more. From the viewpoint of reworkability, the adhesion of the thermally conductive resin composition to PET is preferably at a certain level or lower, and is preferably 3.5 MPa or less, more preferably 3.0 MPa or less, and even more preferably 2.5 MPa or less.

The elongation of the thermally conductive resin composition of the present invention after being cured may be, for example, 0.40 mm or more, and is preferably 0.58 mm or more, more preferably 0.70 mm or more, and even more preferably 0.75 mm or more. Elongation is not particularly limited and, from the viewpoint of imparting a certain level of adhesion, is preferably 2 mm or less, more preferably 1.4 mm or less, and even more preferably 1 mm or less.

The adhesion and the elongation of the thermally conductive resin composition may be determined by measuring shear adhesion and shear elongation in accordance with DIN EN 1465. Note that the breaking strength is referred to as "adhesion", and the elongation at break is referred to as "elongation". Meanwhile, two sheets of glass fiber-reinforced PET film each having 25 mm × 100 mm and a thickness of 2.0 mm are provided as substrates, and the ends of the two sheets are bonded together with a cured product of the thermally conductive resin composition applied to an area of 25 mm × 15 mm such that the thickness after curing is 2 mm to give a measurement sample. The measurement is carried out in a 25°C environment at a tensile speed of 10 mm/min. Curing of the thermally conductive resin composition may be carried out by curing the thermally conductive resin composition between the PET film sheets. For example, in the case of a two-component type, the first agent and the second agent may be mixed, applied to be disposed between the PET film sheets, and then left to stand at room temperature (25°C) for 336 hours.

### <Thermal conductivity>

The thermally conductive resin composition of the present invention has a thermal conductivity of the cured product thereof which is preferably 1.5 W/(m·K) or more, more preferably 2 W/(m·K) or more, and even more preferably 2.5 W/(m·K) or more. Due to the thermally conductive resin composition having the thermal conductivity of the cured product being at these lower limits or above, thermally conducting properties are enhanced. Accordingly, when the thermally conductive resin composition is used in, for example, a battery cell assembly, heat produced from battery cells can be efficiently transferred to a module housing and a battery pack via the cured product (a thermally conductive member) of the thermally conductive resin composition, and an excessively increased temperature of the battery cells can be prevented. A higher thermal conductivity is more preferable and, practically, the thermal conductivity is, for example, 25 W/(m·K) or less.

Thermal conductivity can be measured in accordance with ASTM D 5470-06.

Specifically, the thermally conductive resin composition is applied in an excessive amount so as to be larger than the thickness at the time of measurement such that the measurement die that serves as a heating element is covered, then sandwiched with the heat dissipating element, and compressed with a load of 30 psi until the thickness of the adhesive becomes 1.0 mm, 1.5 mm, and 2.0 mm, and the thermal resistances at these thicknesses are measured. The thickness can be regulated by a spacer. A graph depicting these three thermal resistance values is created, with the horizontal axis representing thickness and the vertical axis representing thermal resistance, and the least squares method is used to obtain an approximate straight line for the three points. The inclination of the approximate straight line is defined as thermal conductivity.

### (Supply form)

The form of the thermally conductive resin composition of the present invention may be a one-component type or a two-component type in which a first agent and a second agent are combined, and the two-component type is preferable from the viewpoint of storage stability.

In the case of a two-component type, the thermally conductive resin composition may be cured by mixing the first agent and the second agent and leaving the mixture to stand at room temperature (25°C), or may be cured by mixing the first agent and the second agent and then heating the mixture. On the other hand, in the case of a one-component type, the thermally conductive resin composition may be cured by being heated. When cured by being heated, the thermally conductive resin composition may be heated to, for example, about 50 to 300°C.

In a two-component thermally conductive resin composition, the mass ratio of the first agent to the second agent (second agent/first agent) may be, for example, 0.25 or more and 4 or less, and is preferably 1 or a value close to 1, and, specifically, preferably 0.8 or more and 1.2 or less, more preferably 0.9 or more and 1.1 or less, and even more preferably 0.95 or more and 1.05 or less. Thus, regulating the mass ratio of the first agent to the second agent to 1 or a value close to 1 facilitates the preparation of the thermally conductive resin composition.

In a two-component thermally conductive resin composition, preferably, the first agent and the second agent are both liquid at ordinary temperature (25°C), and the viscosities of the first agent and the second agent are the same, or even when the viscosities are different, the difference between the viscosities is small. Thus, regulating the viscosities of the first agent and the second agent to mutually the same or close values facilitates the uniform mixing of the first agent and the second agent.

Specifically, the difference between the viscosity (Pa·s) of the first agent and the viscosity (Pa·s) of the second agent is preferably 200 Pa·s or less, more preferably 150 Pa·s or less, and even more preferably 100 Pa·s or less. The viscosity difference may be 0 Pa·s or more.

The viscosities of the first agent and the second agents are each not particularly limited, and are preferably 10 Pa·s or more and 500 Pa·s or less, more preferably 20 Pa·s or more and 300 Pa·s or less, and even more preferably 40 Pa·s or more and 250 Pa·s or less.

The viscosities of the first agent and the second agent as referred to herein can be measured using a rheometer (for example, "MCR-302e" rheometer manufactured by Anton Paar) by regulating the temperature of a sample to 25°C using a Peltier plate, placing the sample on a φ25 mm parallel plate, leaving it to stand for 10 minutes, and then continuously changing the shear rate within the range of 0.0001 to 100 (1/sec). The viscosity value is a value obtained at a shear rate of 3.16 (1/s).

In a two-component thermally conductive resin composition, the first agent may contain an epoxy resin, and the second agent may contain an amine curing agent. Preferably, in a two-component thermally conductive resin composition, the first agent contains an epoxy resin, but does not contain an amine such as an amine curing agent. However, the first agent may contain an amine as long as the amine does not react with the epoxy resin contained. On the other hand, preferably the second agent contains an amine such as an amine curing agent, but does not contain an epoxy resin. However, the second agent may contain an epoxy resin as long as it does not react with an amine contained.

The thermally conductive filler is contained in at least one of the first agent or the second agent, and is preferably contained in both the first agent and the second agent. Accordingly, preferably the first agent contains an epoxy resin and a thermally conductive filler, and the second agent contains an amine curing agent and a thermally conductive filler. More preferably the first agent does not contain an amine such as an amine curing agent, and the second agent does not contain an epoxy resin. Accordingly, even more preferably the entirety of the epoxy resin of the thermally conductive resin composition is contained in the first agent, and the entirety of the amine curing agent of the thermally conductive resin composition is contained in the second agent.

The thermally conductive filler is preferably contained in both the first agent and the second agent as described above and, more preferably, the filling rates of the thermally conductive filler in the first agent and the second agent are approximately the same. Specifically, the ratio of the filling rate of the thermally conductive filler in the second agent to the filling rate of the thermally conductive filler in the first agent is preferably 0.67 or more and 1.5 or less, more preferably 0.83 or more and 1.2 or less, and even more preferably 0.91 or more and 1.1 or less. By regulating the filling rates of the thermally conductive filler in the first agent and the second agent to being approximately the same, the difference between the viscosities of the first agent and the second agent is readily reduced, and the mass ratio of the first agent to the second agent is readily brought close to 1. The filling rate of the thermally conductive filler in the first agent means the volume ratio (% by volume) of the filler to the total volume of the first agent. The same applies to the filling rate of the thermally conductive filler in the second agent.

In a two-component type, the dispersant, the diluent, and other additives may be contained in one or both of the first agent and the second agent as necessary. For example, when the thermally conductive filler is contained in both the first agent and the second agent, the dispersant may be contained in both the first agent and the second agent.

When the thermally conductive resin composition is a two-component type, separate containers are preferably filled with the first agent and the second agent, and specifically a first container is filled with the first agent, and the a second container is filled with the second agent. The first container and the second container may be separate bodies, or may be integrated into a single body. Integrating the first container and the second container into a single body facilitate the supplying of the first container and the second container as a container set to the demand destination. Herein, the first container filled with the first agent and the second container filled with the second agent may be collectively referred to as a container set.

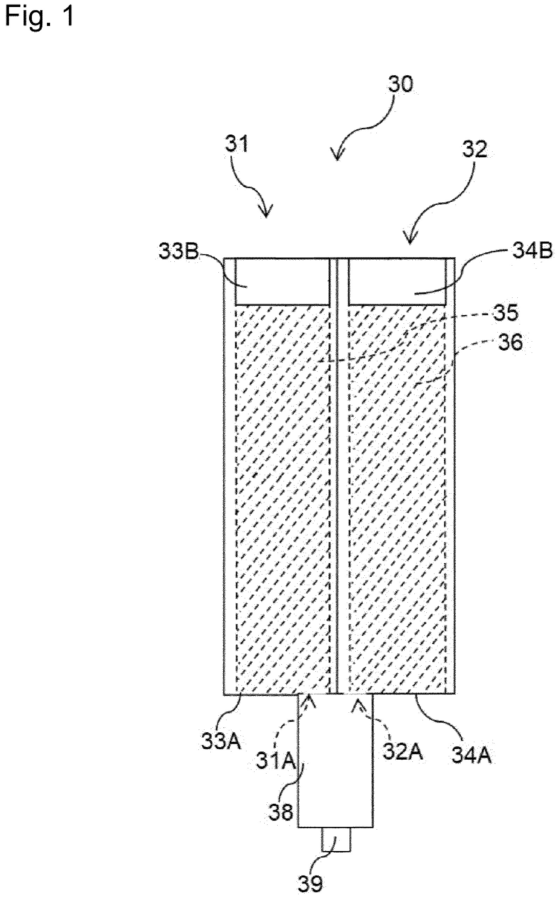

Examples of containers include, but are not limited to, syringes and cartridges. For example, when filling a syringe with the adhesive, the syringe is preferably a dual barrel syringe. A dual barrel syringe 30 has a first syringe 31 constituting a first container and a second syringe 32 constituting a second container that are parallelly integrated into a single body as shown in Fig. 1. A first agent and a second agent 35, 36 with which the syringes 31, 32 are filled respectively may be discharged from the syringes that serve as dispensers and mixed.

When using a cartridge, the container set may be composed of a first cartridge constituting the first container and a second cartridge constituting the second container, and such cartridges may be integrated into a single body. The cartridges may be usually attached to syringes (e.g., a first syringe and a second syringe) or the like, and the first agent delivered from the first cartridge and the second agent delivered from the second cartridge may be discharged from the respective outlets of the first syringe and the second syringe that serve as dispensers and mixed.

The first agent and the second agent may be mixed using a mixing apparatus such as a static mixer. For example, a static mixer 38 may be connected to an outlet 31A of the first syringe 31 and an outlet 32A of the second syringe 32, and the first agent 35 and the second agent 36 discharged from the outlets 31A and 32A can be mixed inside the mixer 38. The mixture (thermally conductive resin composition) obtained by being mixed in the mixer 38 may be discharged from an outlet 39 of the mixer 38.

Each of the syringes 31, 32 may have a structure in which the openings of barrels 33A, 34A respectively filled with the first agent 35 and the second agent 36 are closed by lids 33B, 34B. Concerning the syringe 30 shown in Fig. 1, the first agent 35 and the second agent 36 after the lids 33B, 34B are removed may be respectively discharged from the outlets 31A, 32A by being pushed by plungers (not shown) inserted through the openings.

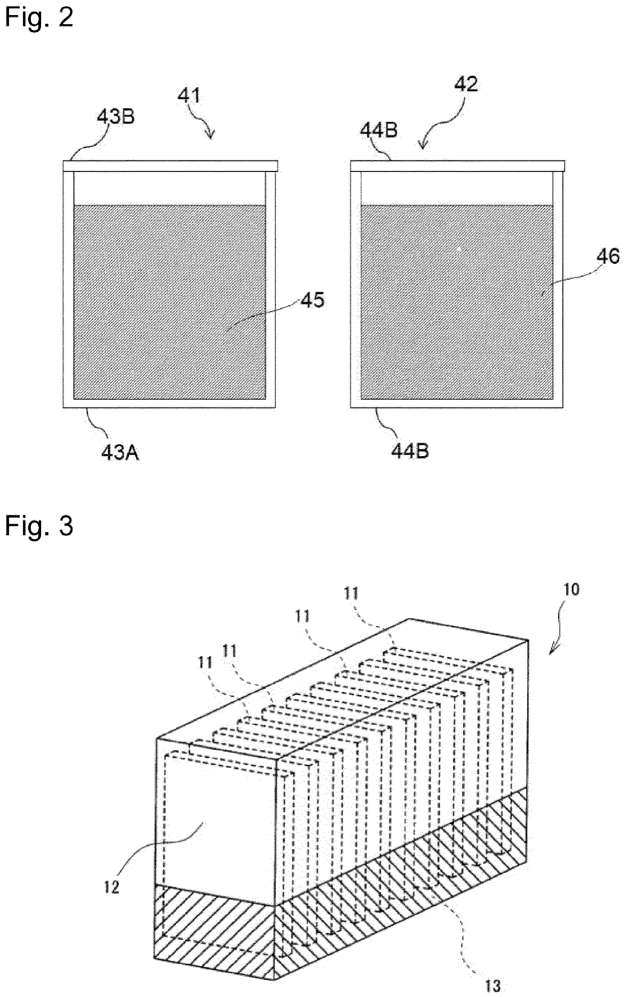

When using pail cans, the container set may include a first pail can 41 that constitutes the first container and is filled with a first agent 45 and a second pail can 42 that constitutes the second container and is filled with a second agent 46 as shown in Fig. 2. For example, the pail cans 41, 42 respectively include container bodies 43A, 44A that are filled with the first agent 45 and the second agent 46, respectively, and have openings, and lids 43B, 44B for closing the openings of the container bodies 43A, 44B, respectively.

### (Method for preparing thermally conductive resin composition)

When the thermally conductive resin composition of the present invention is a two-component type, the first agent and the second agent may be obtained by mixing the components constituting the first agent and the second agent, respectively. Similarly, the thermally conductive resin composition when being a one-component type may be obtained by mixing the components constituting the thermally conductive resin composition. The method for mixing the components is not particularly limited, and, for example, the thermally conductive resin composition may be prepared by adding a thermally conductive filler and, moreover, optionally used additives such as a dispersant to an epoxy resin, an amine curing agent, or both, and then stirring or kneading the mixture.

The thermally conductive filler may also be surface-treated with a dispersant and then mixed with an epoxy resin, an amine curing agent, or both. By being surface-treated with a dispersant in advance, the thermally conductive filler has a surface that is modified with the dispersant in advance. The thermally conductive filler that is surface-modified in advance may then be mixed with an epoxy resin, an amine curing agent, or both to prepare the thermally conductive resin composition or the first or second agent of the thermally conductive resin composition.

The method for treating the surface with a dispersant in advance is not particularly limited, and a known method can be used such as a wet treatment method or a dry treatment method. In the wet treatment method, for example, the thermally conductive filler may be added to and mixed with a treatment liquid in which the dispersant is dispersed or dissolved in a solvent, and then the mixture may be dried, thermally treated, washed, or the like to cause the dispersant to be bonded or attached to the surface of the thermally conductive filler. The dry treatment method is a surface treatment method that does not involve a dispersion medium, and, specifically, the thermally conductive filler is added to the dispersant, and the mixture is stirred by a mixer or the like and then thermally treated to cause the dispersant to be bonded or attached to the surface of the thermally conductive filler.

### [Thermally conductive member]

The thermally conductive resin composition of the present invention may be used as a thermally conductive member. The thermally conductive resin composition of the present invention becomes a thermally conductive member by being cured. The thermally conductive member of the present invention is formed of the cured product of the thermally conductive resin composition, and contains a polymer matrix and a thermally conductive filler. The polymer matrix is composed of an epoxy resin cured product obtained by curing an epoxy resin and amine curing agent, and the thermally conductive filler is dispersed within the polymer matrix and retained by the polymer matrix. The thermally conductive member may be used by being disposed between two components such as a heating element and a heat-dissipating element. Examples of the heating element include electronic parts that produce heat, such as a battery. Examples of the heat-dissipating element include housings and cooling members such as a heat sink and a cooling plate.

### [Applications]

The thermally conductive resin composition and the thermally conductive member of the present invention can be used in a variety of applications, for example can be used for various electronic device applications, exemplified by battery assemblies such as lithium-ion battery (LiB) assemblies, power electronics, electronics packaging, LEDs, solar cells, and electrical grids. Among these, the adhesive and the thermally conductive member are preferably used in a battery assembly, and more preferably used in a LiB assembly. Accordingly, in a preferable embodiment of the present invention, a battery assembly provided with the above thermally conductive member is provided. The battery assembly such as a LiB assembly can be preferably used in automobiles such as electric vehicles.

In battery assembly applications, the thermally conductive resin composition or the thermally conductive member of the present invention is preferably used as a gap filler in a battery assembly. Also, the thermally conductive resin composition or the thermally conductive member of the present invention is, in one aspect, preferably used in a battery module, and more preferably used as a gap filler in a battery module. Below, an example in which the thermally conductive member of the present invention is applied to a battery module will now be described.

The battery module includes a gap filler composed of the thermally conductive member, a plurality of battery cells, and a module housing accommodating the battery cells, wherein the gap filler is disposed inside the module housing. The gap filler composed of the thermally conductive material is provided between the battery cells and between the battery cells and the module housing, and the provided gap filler tightly adheres to the battery cells and the module housing. Accordingly, the gap filler between the battery cells has a function of maintaining the separated state between the battery cells. Also, the gap filler between the battery cells and the module housing tightly adheres to both the battery cells and the module housing, and functions to transfer heat produced by the battery cells to the module housing.

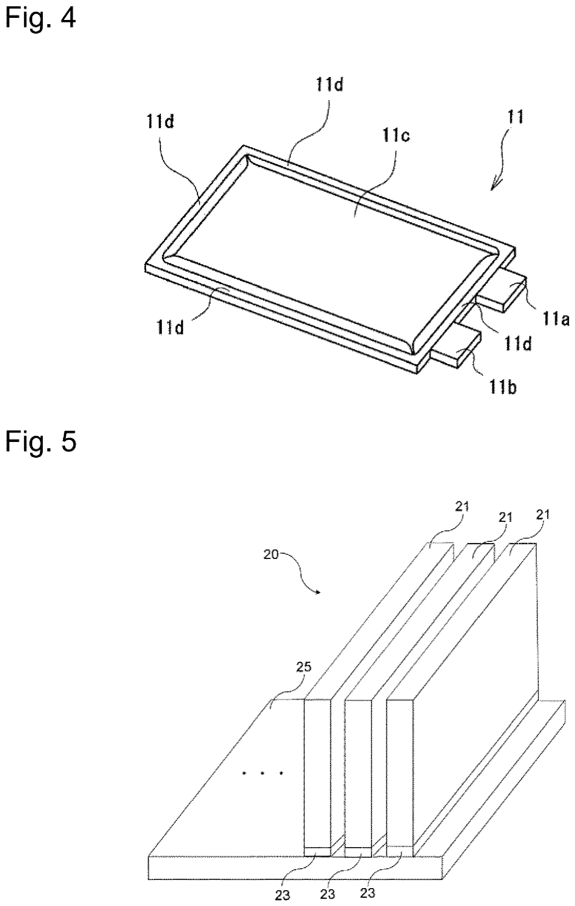

Fig. 3 shows a specific configuration of a battery module. Fig. 4 shows a specific configuration of each battery cell. As shown in Fig. 3, a plurality of battery cells 11 are disposed inside a battery module 10. Each battery cell 11 is laminated with a flexible exterior film and encapsulated inside it, and the overall shape is a flat body that has a small thickness in relation to the height and width. As shown in Fig. 4, the battery cell 11 may be formed such that a positive electrode 11a and a negative electrode 11b are exposed outside, and a central part 11c of the flat surface is thicker than a crimped edge 11d. Also, the surface of each battery cell 11 is preferably coated with a resin material. By coating the surface of each battery cell 10 with a resin material, insulating properties are readily ensured. The resin material is not particularly limited, and examples include polyester resins such as PET (polyethylene terephthalate), polyimide resins, olefin resins such as polypropylene resins, and polycarbonate resins, and PET is more preferable among these.

As shown in Fig. 3, the battery cells 11 are disposed such that their flat surfaces face each other. In the configuration of Fig. 3, the gap filler 13 is provided not to cover the entirety of the battery cells 11 accommodated inside the module housing 12. The gap filler 13 is provided so as to fill the gaps present in a portion (bottom part) inside the module housing 12. The gap filler 13 is provided between the battery cells 11 and between the battery cells 11 and the module housing 12, and tightly adheres to these portions of the surfaces of the battery cells 11 and the inner surface of the module housing 12.

The gap filler 13 provided between the battery cells 11 adheres to the surfaces of the battery cells 11, the gap filler 13 itself has suitable elasticity and flexibility, and thus even when external force that displaces the space between the battery cells 11 is applied, the gap filler 13 can mitigate strain/deformation caused by the external force. Accordingly, the gap filler 13 has a function of maintaining the separated state between the battery cells 11.

The gap filler 13 provided in a gap between the battery cells 11 and the inner surface of the module housing 12 also tightly adheres to the surfaces of the battery cells 11 and the inner surface of the module housing 12. As a result, heat produced inside the battery cells 11 is transferred via the gap filler 13 adhering to the surfaces of the battery cells 11 to the inner surface of the module housing 12 to which the other surface of the gap filler 13 tightly adheres.

As described above, the surface of the battery cells 11 may be coated with a resin material such as PET, and the thermally conductive resin composition of the present invention has increased adhesion to a resin material such as PET. Accordingly, the gap filler 13 can be prevented from being peeled off between the battery cells 11 or between the battery cells 11 and the module housing 12.

The gap filler 13 can be formed in the battery module 10 by applying a liquid thermally conductive resin composition using a commonly used dispenser and then curing the liquid thermally conductive resin composition. As described above, by lowering the viscosity of the thermally conductive resin composition of the present invention, workability during the formation of the gap filler 13 is enhanced. Moreover, since the gap filler 13 has increased adhesion and enhanced elongation, the gap filler 13 does not peel off from an adherend such as the battery cells 11 for a long period of time, and high thermal conductivity can be maintained for a long period of time.

When forming the gap filler 13, the two-component thermally conductive resin composition described above is preferably used. The two-component adhesive is easy to store, is unlikely cured when applied using a dispenser when mixed immediately before use, and can promptly be cured after being applied. Also, application using a dispenser is preferable also in that the liquid thermally conductive resin composition can reach relatively deep inside the housing 12 of the battery module 10.

The gap filler 13 for covering the battery cells 11 preferably covers 20 to 40% of each battery cell 11 on one side of the battery cell 11. With a coverage of 20% or more, the battery cells 11 can be stably retained. Also, by sufficiently covering battery cells that produce a large amount of heat, heat dissipation efficiency is enhanced. On the other hand, with a coverage of 40% or less, heat produced from the battery cells 11 can be efficiently dissipated, and a weight increase, deterioration of workability, and the like can also be prevented. To enhance heat dissipation efficiency, it is preferable to cover the side of the battery cells 11 on which there are the electrodes 11a, 11b with the gap filler 13, and more preferable to cover the entirety of the electrodes 11a, 11b with the gap filler 13. As described above, the battery module 10 can cause heat produced from the battery cells 11 to escape to the module housing 12 via the gap filler 13.

The gap filler 13 is also preferably used in a battery pack including a plurality of battery modules 10 inside. A battery pack generally includes the battery modules 10 and a battery pack housing accommodating the battery modules 10. In the battery pack, the gap filler 13 can be provided between the battery modules 10 and the battery pack housing. Accordingly, heat that has escaped to the module housing 12 as described above can further escape to the battery pack housing, thus enabling effective heat dissipation.

While the battery assembly has been described so far in reference to a battery module or a battery pack including a battery module as an example, the present invention may be applied to a battery assembly having no battery module, and is also preferably applied to, for example, a battery assembly having a cell-to-pack structure.

Fig. 5 shows a schematic diagram of a battery assembly having a cell-to-pack structure. A battery assembly 20 having a cell-to-pack structure includes a plurality of battery cells 21 and a battery pack housing, and the battery cells 21 are bonded to a base member 25 constituting the battery pack housing via a gap filler 23 composed of a thermally conductive member (a cured product of the thermally conductive resin composition). The base member 25 may constitute a cooling plate or the like. The base member 25 composed of a cooling plate or the like may have an uneven surface, and the battery cells 21 may be bonded to the uneven surface of the base member 25 via the gap filler 23.

The thermally conductive resin composition of the present invention has an enhanced thermal conductivity and increased adhesion, accordingly the gap filler 23 composed of a cured product of the thermally conductive resin composition can fix the battery cells 21 to the base member 25 with increased adhesion and cause heat produced from the battery cells 21 to effectively escape to the base member 25.

The gap filler 23 in the battery assembly 20 may be formed in the same manner as the formation of the gap filler 13 in the above battery module using, for example, a commonly used dispenser. The thermally conductive resin composition of the present invention has lowered viscosity, and thus workability when forming the gap filler 23 is also enhanced.

While examples have been described so far in which the surfaces of the battery cells 11, 21 are coated with a resin material, components other than the battery cells, e.g., the base member such as a cooling plate, the battery module, the module housing, and the battery pack housing, may be coated with a resin material or may be composed of a resin material. In such a case as well, by using the thermally conductive resin composition of the present invention as a gap filler to be disposed between the components, the components can be suitably bonded to each other.

### Examples

Below, the present invention will now be described in more detail by way of Examples, but the present invention is not limited to the Examples in any way.

### [Shear adhesion test]

The adhesion of the thermally conductive resin composition to PET was measured in accordance with DIN EN 1465 by the following method. First, two sheets of glass fiber-reinforced PET film ("Rynite FR530 PET", manufactured by Nippon Testpanel Co., Ltd.) having a width of 25 mm, a length of 100 mm, and a thickness of 2 mm were provided. The thermally conductive resin composition was then applied to one longitudinal end of the film over the entire width of the film to a length of 15 mm such that the thickness after curing was 2 mm. Then, the longitudinal end of the other sheet was placed on top of the applied thermally conductive resin composition, and the sheets were left to stand in this state in an environment having 25°C and 50% RH for 336 hours to cure the thermally conductive resin composition to give a measurement sample. A tensile test was performed on the resulting measurement sample wherein the measurement sample was pulled in the longitudinal direction in an environment having 25°C and 50% RH at a tensile speed of 10 mm/sec until it broke, and the breaking strength was defined as "adhesion" (shear adhesion). Elongation at break was defined as "elongation" (shear elongation).

### [Thermal conductivity]

The thermal conductivities of the first agent, the second agent, and the thermally conductive composition were determined by a method involving measuring thermal resistance using a measuring device in accordance with ASTM D 5470-06.

Specifically, the first agent, the second agent, or the thermally conductive composition was applied in an excessive amount so as to be larger than the thickness at the time of measurement such that the measurement die that served as a heating element was covered, then sandwiched with the heat dissipating element, and compressed with a load of 30 psi until the thickness of the adhesive became 1.0 mm, 1.5 mm, and 2.0 mm, and the thermal resistances at these thicknesses were measured. The thickness was regulated by a spacer. A graph depicting these three thermal resistance values was created, with the horizontal axis representing thickness and the vertical axis representing thermal resistance, and the least squares method was used to obtain an approximate straight line for the three points. The inclination of the approximate straight line was defined as thermal conductivity.

The measurement of thermal resistance was performed at 55°C using LW-9389 manufactured by Long Win Science and Technology Corporation. The area of the measurement die was 1 inch × 1 inch.

### [Viscosity]

A sample of the thermally conductive resin composition immediately after preparation (immediately after mixing the first agent and the second agent) was measured using a rheometer (for example, "MCR-302e" rheometer manufactured by Anton Paar) by regulating the temperature of the sample to 25°C using a Peltier plate, placing the sample on a φ25 mm parallel plate and, immediately, continuously changing the shear rate within the range of 0.0001 to 100 (1/s). The viscosity value was a value of viscosity measured at a shear rate of 3.16 (1/s). Concerning the first agent and the second agent before being mixed, the viscosities were measured in the same manner after the samples were placed and left to stand for 10 minutes.

### [Examples 1 to 17 and Comparative Examples 1 to 6]

According to the formulations in Tables 1, 2, 3, and 4, the components were mixed to prepare the first agent and the second agent. The prepared first agent and second agent were mixed at room temperature in the mass ratios (A:B) set forth in Tables 1, 2, 3, and 4 to give thermally conductive resin compositions. Evaluation tests were performed on the resulting thermally conductive resin compositions.

The components used in the Examples and Comparative Examples were as follows.

### (Epoxy resin)

Polyfunctional epoxy resin 1: Bisphenol F epoxy resin, trade name "jER806", manufactured by Mitsubishi Chemical Corporation, molecular weight 330, epoxy equivalent 165 g/eq, number of functional groups 2
Polyfunctional epoxy resin 2: Trimethylolpropane polyglycidyl ether, trade name "EX-321", molecular weight 325, epoxy equivalent 130 g/eq, number of functional groups 2 to 3
Monofunctional epoxy resin: Aliphatic glycidyl ether (C12 to 14 aliphatic alcohol), trade name "Epogosey ML", manufactured by Yokkaichi Chemical Co., Ltd., epoxy equivalent 282 g/eq, number of functional groups 1

### (Amine curing agent)

Amine curing agent 1: Trimethylolpropane poly(oxypropylene) triamine (trade name "T-403", manufactured by HUNTSMAN), molecular weight 440, active hydrogen equivalent 73.3 g/eq, number of active hydrogen atoms of amino groups = 6, functional group = 3 × (-NH₂)
Amine curing agent 2: Polyoxypropylenediamine, trade name "D-400", manufactured by HUNTSMAN, molecular weight 430, active hydrogen equivalent 107.5 g/eq, number of active hydrogen atoms of amino groups = 4, functional group = 2 × (-NH₂)
Amine curing agent 3: Poly(oxybutylene/oxypropylene)diamine, trade name "RT-1000", manufactured by HUNTSMAN, molecular weight 1000, active hydrogen equivalent 250 g/eq, number of active hydrogen atoms of amino groups = 4, functional group = 2 × (-NH₂)

### (Dispersant)

Polymer-based dispersant (acidic group-containing copolymer) (Non-reactive diluent)
Cetyl 2-ethylhexanoate, trade name "NIKKOL CIO", manufactured by Nikko Chemicals Co., Ltd., molecular weight 369

### (Thermally conductive filler)

- Aluminum hydroxide 1: Average particle size: 1 µm
- Aluminum hydroxide 2: Average particle size: 10 µm
- Aluminum hydroxide 3: Average particle size: 90 µm
- Alumina 1: Average particle size: 45 µm
- Alumina 2: Average particle size: 5 µm
- Alumina 3: Average particle size: 75 µm

**[Table 1]**

| | | Specific gravity /Unit | Example 1 | | Example 2 | | Example 3 | | Example 4 | | Example 5 | | Example 6 | | Example 7 | | Example 8 | |
|---|---|---|---|---|---|---|---|---|---|---|---|---|---|---|---|---|---|---|
| | | | A | B | A | B | A | B | A | B | A | B | A | B | A | B | A | B |
| Formulation (part by mass) | Polyfunctional epoxy resin 1 | 1.20 | 67 | | 67 | | 67 | | 67 | | 67 | | 67 | | 67 | | 67 | |
| | Polyfunctional epoxy resin 2 | 1.17 | | | | | | | | | | | | | | | | |
| | Monofunctional epoxy resin | 0.89 | 33 | | 33 | | 33 | | 33 | | 33 | | 33 | | 33 | | 33 | |
| | Amine curing agent 1 | 0.97 | | 100 | | 100 | | 100 | | 100 | | 100 | | 100 | | 100 | | 100 |
| | Amine curing agent 2 | 0.97 | | | | | | | | | | | | | | | | |
| | Amine curing agent 3 | 0.97 | | | | | | | | | | | | | | | | |
| | Non-reactive diluent | 1.00 | | | | | | | | | | | | | | | | |
| | Dispersant | 1.00 | 3 | 3 | 3 | 3 | 3 | 3 | 3 | 3 | 3 | 3 | 3 | 3 | 3 | 3 | 3 | 3 |
| | Aluminum hydroxide 1 | 2.42 | 134 | 149 | 134 | 149 | 134 | 149 | 134 | 149 | 134 | 149 | 134 | 149 | 134 | 149 | 134 | 149 |
| | Aluminum hydroxide 2 | 2.42 | 173 | 193 | 173 | 193 | 173 | 193 | 173 | 193 | 173 | 193 | 173 | 193 | 173 | 193 | 173 | 193 |
| | Aluminum hydroxide 3 | 2.42 | 325 | 362 | 325 | 362 | 325 | 362 | 325 | 362 | 325 | 362 | 325 | 362 | 325 | 362 | 325 | 362 |
| | Alumina 1 | 3.96 | 301 | 336 | 301 | 336 | 301 | 336 | 301 | 336 | 301 | 336 | 301 | 336 | 301 | 336 | 301 | 336 |
| | Alumina 2 | 3.96 | | | | | | | | | | | | | | | | |
| | Alumina 3 | 3.96 | | | | | | | | | | | | | | | | |
| | Total | - | 1036 | 1141 | 1036 | 1141 | 1036 | 1141 | 1036 | 1141 | 1036 | 1141 | 1036 | 1141 | 1036 | 1141 | 1036 | 1141 |
| A:B (mass ratio) | | - | 100 | 47 | 100 | 57.5 | 100 | 69 | 100 | 80.5 | 100 | 91.7 | 100 | 100 | 100 | 103.2 | 100 | 107 |
| Equivalent ratio (NH/Ep) | | | 1.12 | | 1.36 | | 1.64 | | 1.91 | | 2.18 | | 2.37 | | 2.45 | | 2.54 | |
| Filling rate in each agent | Total of filler | vol% | 77.9% | 78.0% | 77.9% | 78.0% | 77.9% | 78.0% | 77.9% | 78.0% | 77.9% | 78.0% | 77.9% | 78.0% | 77.9% | 78.0% | 77.9% | 78.0% |
| | Alumina | vol% | 17.6% | 17.6% | 17.6% | 17.6% | 17.6% | 17.6% | 17.6% | 17.6% | 17.6% | 17.6% | 17.6% | 17.6% | 17.6% | 17.6% | 17.6% | 17.6% |
| | Aluminum hydroxide | vol% | 60.3% | 60.4% | 60.3% | 60.4% | 60.3% | 60.4% | 60.3% | 60.4% | 60.3% | 60.4% | 60.3% | 60.4% | 60.3% | 60.4% | 60.3% | 60.4% |
| | Total of epoxy and amine | vol% | 21.5% | 21.4% | 21.5% | 21.4% | 21.5% | 21.4% | 21.5% | 21.4% | 21.5% | 21.4% | 21.5% | 21.4% | 21.5% | 21.4% | 21.5% | 21.4% |
| Filling rate in thermally conductive resin composition | Total of filler | vol% | 77.9% | | 77.9% | | 77.9% | | 78.0% | | 78.0% | | 78.0% | | 78.0% | | 78.0% | |
| | Alumina | vol% | 17.6% | | 17.6% | | 17.6% | | 17.6% | | 17.6% | | 17.6% | | 17.6% | | 17.6% | |
| | Aluminum hydroxide | vol% | 60.3% | | 60.3% | | 60.4% | | 60.4% | | 60.4% | | 60.4% | | 60.4% | | 60.4% | |
| | Total of epoxy and amine | vol% | 21.5% | | 21.5% | | 21.5% | | 21.5% | | 21.5% | | 21.5% | | 21.5% | | 21.5% | |
| Specific gravity | Each agent | - | 2.39 | 2.37 | 2.39 | 2.37 | 2.39 | 2.37 | 2.39 | 2.37 | 2.39 | 2.37 | 2.39 | 2.37 | 2.39 | 2.37 | 2.39 | 2.37 |
| | Thermally conductive resin composition | - | 2.39 | | 2.39 | | 2.38 | | 2.38 | | 2.38 | | 2.38 | | 2.38 | | 2.38 | |
| Content of tri- or higher functional epoxy resin | | wt% | 0% | | 0% | | 0% | | 0% | | 0% | | 0% | | 0% | | 0% | |
| Content of amine curing agent having two primary amino groups and further having one or more reactive amino groups per molecule | | wt% | 100% | | 100% | | 100% | | 100% | | 100% | | 100% | | 100% | | 100% | |
| Shear adhesion | Adhesion | MPa | 1.85 | | 2.27 | | 2.4 | | 2.1 | | 1.8 | | 1.51 | | 1.42 | | 1.28 | |
| | Failure mode (reference) | | Interfacial cohesive failure | | Interfacial cohesive failure | | Interfacial cohesive failure | | Interfacial cohesive failure | | Interfacial cohesive failure | | Interfacial cohesive failure | | Interfacial cohesive failure | | Interfacial cohesive failure | |
| Shear elongation | Elongation | mm | 0.60 | | 0.61 | | 0.62 | | 0.65 | | 0.72 | | 0.74 | | 0.75 | | 0.80 | |
| Viscosity | Each agent | Pa·s | 130 | 163 | 130 | 163 | 130 | 163 | 130 | 163 | 130 | 163 | 130 | 163 | 130 | 163 | 130 | 163 |
| | Thermally conductive resin composition | Pa·s | 141 | | 142 | | 143 | | 145 | | 146 | | 147 | | 147 | | 147 | |
| Thermal conductivity | Each agent | W/m·K | 2.90 | 2.76 | 2.90 | 2.76 | 2.90 | 2.76 | 2.90 | 2.76 | 2.90 | 2.76 | 2.90 | 2.76 | 2.90 | 2.76 | 2.90 | 2.76 |
| | Thermally conductive resin composition | W/m·K | 2.86 | | 2.85 | | 2.84 | | 2.84 | | 2.83 | | 2.83 | | 2.83 | | 2.83 | |

**[Table 2]**

| | | Specific gravity /Unit | Example 9 | | Example 10 | | Example 11 | | Example 12 | | Comparative Example 1 | | Comparative Example 2 | | Comparative Example 3 | | Comparative Example 4 | |
|---|---|---|---|---|---|---|---|---|---|---|---|---|---|---|---|---|---|---|
| | | | A | B | A | B | A | B | A | B | A | B | A | B | A | B | A | B |
| Formulation (part by mass) | Polyfunctional epoxy resin 1 | 1.20 | 67 | | 67 | | 67 | | 67 | | 67 | | 67 | | 67 | | 67 | |
| | Polyfunctional epoxy resin 2 | | | | | | | | | | | | | | | | | |
| | Monofunctional epoxy resin | 0.89 | 33 | | 33 | | 33 | | 33 | | 33 | | 33 | | 33 | | 33 | |
| | Amine curing agent 1 | 0.97 | | 100 | | 100 | | 100 | | 100 | | 100 | | 100 | | 100 | | 100 |
| | Amine curing agent 2 | | | | | | | | | | | | | | | | | |
| | Amine curing agent 3 | | | | | | | | | | | | | | | | | |
| | Non-reactive diluent | | | | | | | | | | | | | | | | | |
| | Dispersant | 1.00 | 3 | 3 | 3 | 3 | 3 | 3 | 3 | 3 | 3 | 3 | 3 | 3 | 3 | 3 | 3 | 3 |
| | Aluminum hydroxide 1 | 2.42 | 134 | 149 | 116 | 130 | 123 | 137 | 142 | 158 | 134 | 149 | 134 | 149 | 134 | 149 | 134 | 149 |
| | Aluminum hydroxide 2 | 2.42 | 173 | 193 | 151 | 168 | 159 | 177 | 183 | 204 | 173 | 193 | 173 | 193 | 173 | 193 | 173 | 193 |
| | Aluminum hydroxide 3 | 2.42 | 325 | 362 | 283 | 315 | 299 | 333 | 344 | 383 | 325 | 362 | 325 | 362 | 325 | 362 | 325 | 362 |
| | Alumina 1 | 3.96 | 301 | 336 | 262 | 292 | 277 | 309 | 319 | 356 | 301 | 336 | 301 | 336 | 301 | 336 | 301 | 336 |
| | Alumina 2 | | | | | | | | | | | | | | | | | |
| | Alumina 3 | | | | | | | | | | | | | | | | | |
| | Total | - | 1036 | 1141 | 914 | 1006 | 961 | 1058 | 1092 | 1204 | 1036 | 1141 | 1036 | 1141 | 1036 | 1141 | 1036 | 1141 |
| A:B (mass ratio) | | - | 100 | 111 | 100 | 100 | 100 | 100 | 100 | 100 | 100 | 28 | 100 | 34 | 100 | 38.2 | 100 | 114.7 |
| Equivalent ratio (NH/Ep) | | - | 2.63 | | 2.38 | | 2.37 | | 2.37 | | 0.66 | | 0.81 | | 0.91 | | 2.72 | |
| Filling rate in each agent | Total of filler | vol% | 77.9% | 78.0% | 75.4% | 75.5% | 76.4% | 76.6% | 78.9% | 79.0% | 77.9% | 78.0% | 77.9% | 78.0% | 77.9% | 78.0% | 77.9% | 78.0% |
| | Alumina | vol% | 17.6% | 17.6% | 17.0% | 17.1% | 17.3% | 17.3% | 17.8% | 17.8% | 17.6% | 17.6% | 17.6% | 17.6% | 17.6% | 17.6% | 17.6% | 17.6% |
| | Aluminum hydroxide | vol% | 60.3% | 60.4% | 58.4% | 58.5% | 59.2% | 59.3% | 61.1% | 61.2% | 60.3% | 60.4% | 60.3% | 60.4% | 60.3% | 60.4% | 60.3% | 60.4% |
| | Total of epoxy and amine | vol% | 21.5% | 21.4% | 23.9% | 23.9% | 22.9% | 22.9% | 20.5% | 20.5% | 21.5% | 21.4% | 21.5% | 21.4% | 21.5% | 21.4% | 21.5% | 21.4% |
| Filling rate in thermally conductive resin composition | Total of filler | vol% | 78.0% | | 75.5% | | 76.5% | | 78.9% | | 77.9% | | 77.9% | | 77.9% | | 78.0% | |
| | Alumina | vol% | 17.6% | | 17.0% | | 17.3% | | 17.8% | | 17.6% | | 17.6% | | 17.6% | | 17.6% | |
| | Aluminum hydroxide | vol% | 60.4% | | 58.4% | | 59.2% | | 61.1% | | 60.3% | | 60.3% | | 60.3% | | 60.4% | |
| | Total of epoxy and amine | vol% | 21.5% | | 23.9% | | 22.9% | | 20.5% | | 21.5% | | 21.5% | | 21.5% | | 21.5% | |
| Specific gravity | Each agent | - | 2.39 | 2.37 | 2.35 | 2.33 | 2.37 | 2.35 | 2.41 | 2.39 | 2.39 | 2.37 | 2.39 | 2.37 | 2.39 | 2.37 | 2.39 | 2.37 |
| | Thermally conductive resin composition | - | 2.38 | | 2.34 | | 2.36 | | 2.40 | | 2.39 | | 2.39 | | 2.39 | | 2.38 | |
| Content of tri- or higher functional epoxy resin | | wt% | 0% | | 0% | | 0% | | 0% | | 0% | | 0% | | 0% | | 0% | |
| Content of amine curing agent having two primary amino groups and further having one or more reactive amino groups per molecule | | wt% | 100% | | 100% | | 100% | | 100% | | 100% | | 100% | | 100% | | 100% | |
| Shear adhesion | Adhesion | MPa | 1.05 | | 1.32 | | 1.45 | | 1.54 | | 1.1 | | 1.3 | | 1.59 | | 0.9 | |
| | Failure mode (reference) | | Interfacial cohesive failure | | Cohesive failure | | Interfacial cohesive failure | | Interfacial cohesive failure | | Interfacial cohesive failure | | Interfacial cohesive failure | | Interfacial cohesive failure | | Interfacial cohesive failure | |
| Shear elongation | Elongation | mm | 0.90 | | 0.70 | | 0.78 | | 0.72 | | 0.56 | | 0.55 | | 0.54 | | 0.94 | |
| Viscosity | Each agent | Pa·s | 130 | 163 | 60 | 73 | 95 | 118 | 170 | 187 | 130 | 163 | 130 | 163 | 130 | 163 | 130 | 163 |
| | Thermally conductive resin composition | Pa·s | 147 | | 67 | | 107 | | 178 | | 137 | | 138 | | 139 | | 148 | |
| Thermal conductivity | Each agent | W/m·K | 2.90 | 2.76 | 2.23 | 2.22 | 2.57 | 2.49 | 3.19 | 2.84 | 2.90 | 2.76 | 2.90 | 2.76 | 2.90 | 2.76 | 2.90 | 2.76 |
| | Thermally conductive resin composition | W/m·K | 2.83 | | 2.2 | | 2.5 | | 3.0 | | 2.87 | | 2.86 | | 2.86 | | 2.83 | |

| | | | | | | | | | | | | | | | | | | |
|---|---|---|---|---|---|---|---|---|---|---|---|---|---|---|---|---|---|---|
| *A = First agent, B = Second agent *Specific gravity/Unit indicates specific gravity in Formulation, and units of various numerical values in others. | | | | | | | | | | | | | | | | | | |

In Examples 1 to 12 above, the thermally conductive resin compositions contained an epoxy resin, an amine curing agent having three or more active hydrogen atoms of amino groups, and a thermally conductive filler, and had an equivalent ratio (NH/Ep) within a predetermined range and, accordingly, the thermally conductive resin compositions were capable of exhibiting improved elongation while suppressing deterioration of adhesion to a resin material. On the other hand, in Comparative Examples 1 to 4, although the same types of epoxy resin and amine curing agent were used, the equivalent ratio (NH/Ep) was 1 or less or 2.7 or more and, accordingly, compared with Examples 1 to 12, the thermally conductive resin composition failed to exhibit improved elongation while suppressing deterioration of adhesion to a resin material.

In Examples 1 to 12, the amine curing agent had two primary amino groups and one or more reactive amino groups per molecule. Accordingly, when the ratio of the amine curing agent to the epoxy resin is raised to increase the equivalent ratio (NH/Ep), the crosslinking density after reaction is increased. Thus, as the equivalent ratio (NH/EP ratio) was increased, the residual amino groups after reaction was also increased, interactions with the adherend were strengthened due to the polarity caused by the residual amino groups, adhesive strength was also readily increased due to the increased bulk strength caused by the increased crosslinking density after reaction, and the highest adhesion was achieved at a relatively high equivalent ratio (NH/EP ratio).

**[Table 3]**

| | | Specific gravity /Unit | Example 13 | | Example 14 | | Example 15 | | Comparative Example 5 | |
|---|---|---|---|---|---|---|---|---|---|---|
| | | | A | B | A | B | A | B | A | B |
| Formulation (part by mass) | Polyfunctional epoxy resin 1 | 1.20 | | | | | | | | |
| | Polyfunctional epoxy resin 2 | 1.17 | 71 | | 71 | | 71 | | 71 | |
| | Monofunctional epoxy resin | 0.89 | 29 | | 29 | | 29 | | 29 | |
| | Amine curing agent 1 | 0.97 | | | | | | | | |
| | Amine curing agent 2 | 0.97 | | 100 | | 100 | | 100 | | 100 |
| | Amine curing agent 3 | 0.97 | | | | | | | | |
| | Non-reactive diluent | 1.00 | 37 | | 37 | | 37 | | 37 | |
| | Dispersant | 1.00 | 1 | 1 | 1 | 1 | 1 | 1 | 1 | 1 |
| | Aluminum hydroxide 1 | 2.42 | 184 | 150 | 184 | 150 | 184 | 150 | 184 | 150 |
| | Aluminum hydroxide 2 | 2.42 | 238 | 194 | 238 | 194 | 238 | 194 | 238 | 194 |
| | Aluminum hydroxide 3 | 2.42 | 447 | 363 | 447 | 363 | 447 | 363 | 447 | 363 |
| | Alumina 1 | 3.96 | 415 | 337 | 415 | 337 | 415 | 337 | 415 | 337 |
| | Alumina 2 | 3.96 | | | | | | | | |
| | Alumina 3 | 3.96 | | | | | | | | |
| | Total | - | 1423 | 1144 | 1423 | 1144 | 1423 | 1144 | 1423 | 1144 |
| A:B (mass ratio) | | - | 100 | 63 | 100 | 81.5 | 100 | 100 | 100 | 45 |
| Equivalent ratio (NH/Ep) | | - | 1.12 | | 1.45 | | 1.78 | | 0.80 | |
| Filling rate in each agent | Total of filler | vol% | 78.0% | 78.4% | 78.0% | 78.4% | 78.0% | 78.4% | 78.0% | 78.4% |
| | Alumina | vol% | 17.6% | 17.7% | 17.6% | 17.7% | 17.6% | 17.7% | 17.6% | 17.7% |
| | Aluminum hydroxide | vol% | 60.4% | 60.7% | 60.4% | 60.7% | 60.4% | 60.7% | 60.4% | 60.7% |
| | Total of epoxy and amine | vol% | 15.6% | 21.4% | 15.6% | 21.4% | 15.6% | 21.4% | 15.6% | 21.4% |
| Filling rate in thermally conductive resin composition | Total of filler | vol% | 78.1% | | 78.2% | | 78.2% | | 78.1% | |
| | Alumina | vol% | 17.6% | | 17.6% | | 17.7% | | 17.6% | |
| | Aluminum hydroxide | vol% | 60.5% | | 60.5% | | 60.5% | | 60.5% | |
| | Total of epoxy and amine | vol% | 17.9% | | 18.3% | | 18.6% | | 17.4% | |
| Specific gravity | Each agent | - | 2.39 | 2.38 | 2.39 | 2.38 | 2.39 | 2.38 | 2.39 | 2.38 |
| | Thermally conductive resin composition | - | 2.39 | | 2.39 | | 2.38 | | 2.39 | |
| Content of tri- or higher functional epoxy resin | | wt% | 36% | | 36% | | 36% | | 36% | |
| Content of amine curing agent having two primary amino groups and further having one or more reactive amino groups per molecule | | wt% | 0% | | 0% | | 0% | | 0% | |
| Shear adhesion | Adhesion | MPa | 1.9 | | 1.9 | | 1.60 | | 1.6 | |
| | Failure mode (reference) | | Interfacial cohesive failure | | Interfacial cohesive failure | | Interfacial cohesive failure | | Interfacial cohesive failure | |
| Shear elongation | Elongation | mm | 0.54 | | 0.56 | | 0.54 | | 0.50 | |
| Viscosity | Each agent | Pa·s | 111 | 157 | 111 | 157 | 111 | 157 | 111 | 157 |
| | Thermally conductive resin composition | Pa·s | 129 | | 132 | | 134 | | 125 | |
| Thermal conductivity | Each agent | W/m·K | 2.80 | 2.76 | 2.80 | 2.76 | 2.80 | 2.76 | 2.80 | 2.76 |
| | Thermally conductive resin composition | W/m·K | 2.78 | | 2.78 | | 2.78 | | 2.79 | |

**[Table 4]**

| | | Specific gravity /Unit | Example 16 | | Example 17 | | Comparative Example 6 | |
|---|---|---|---|---|---|---|---|---|
| | | | A | B | A | B | A2 | B2 |
| Formulation (part by mass) | Polyfunctional epoxy resin 1 | 1.20 | 64 | | 64 | | 64 | |
| | Polyfunctional epoxy resin 2 | 1.17 | 36 | | 36 | | 36 | |
| | Monofunctional epoxy resin | 0.89 | | | | | | |
| | Amine curing agent 1 | 0.97 | | | | | | |
| | Amine curing agent 2 | 0.97 | | 25 | | 25 | | 25 |
| | Amine curing agent 3 | 0.97 | | 75 | | 75 | | 75 |
| | Non-reactive diluent | 1.00 | 40 | | 40 | | 40 | |
| | Dispersant | 1.00 | 2 | 2 | 2 | 2 | 2 | 2 |
| | Aluminum hydroxide 1 | 2.42 | 195 | 136 | 195 | 136 | 195 | 136 |
| | Aluminum hydroxide 2 | 2.42 | | | | | | |
| | Aluminum hydroxide 3 | 2.42 | | | | | | |
| | Alumina 1 | 3.96 | | | | | | |
| | Alumina 2 | 3.96 | 278 | 194 | 278 | 194 | 278 | 194 |
| | Alumina 3 | 3.96 | 834 | 581 | 834 | 581 | 834 | 581 |
| | Total | - | 1448 | 1012 | 1448 | 1012 | 1448 | 1012 |
| A:B (mass ratio) | | - | 100 | 100 | 100 | 128 | 100 | 70 |
| Equivalent ratio (NH/Ep) | | - | 1.15 | | 1.47 | | 0.80 | |
| Filling rate in each agent | Total of filler | vol% | 74.1% | 70.6% | 74.1% | 70.6% | 74.1% | 70.6% |
| | Alumina | vol% | 57.6% | 54.9% | 57.6% | 54.9% | 57.6% | 54.9% |
| | Aluminum hydroxide | vol% | 16.5% | 15.7% | 16.5% | 15.7% | 16.5% | 15.7% |
| | Total of epoxy and amine | vol% | 17.3% | 28.9% | 17.3% | 28.9% | 17.3% | 28.9% |
| Filling rate in thermally conductive resin composition | Total of filler | vol% | 72.3% | | 72.1% | | 72.6% | |
| | Alumina | vol% | 56.2% | | 56.1% | | 56.5% | |
| | Aluminum hydroxide | vol% | 16.1% | | 16.1% | | 16.2% | |
| | Total of epoxy and amine | vol% | 23.2% | | 23.9% | | 22.2% | |
| Content of tri- or higher functional epoxy resin | | wt% | 18% | | 18% | | 18% | |
| Content of amine curing agent having two primary amino groups and further having one or more reactive amino groups per molecule | | wt% | 0% | | 0% | | 0% | |
| Specific gravity | Each agent | - | 2.97 | 2.84 | 2.97 | 2.84 | 2.97 | 2.84 |
| | Thermally conductive resin composition | - | 2.91 | | 2.90 | | 2.92 | |
| Shear adhesion | Adhesion | MPa | 1.6 | | 1.5 | | 1.5 | |
| | Failure mode (reference) | | Interfacial cohesive failure | | Interfacial cohesive failure | | Interfacial cohesive failure | |
| Shear elongation | Elongation | mm | 0.58 | | 0.60 | | 0.54 | |
| Viscosity | Each agent | Pa·s | 342 | 89 | 342 | 89 | 342 | 89 |
| | Thermally conductive resin composition | Pa·s | 216 | | 200 | | 238 | |
| Thermal conductivity | Each agent | W/m·K | 2.90 | 2.76 | 2.90 | 2.76 | 2.90 | 2.76 |
| | Thermally conductive resin composition | W/m·K | 2,83 | | 2.82 | | 2.84 | |

| | | | | | | | | |
|---|---|---|---|---|---|---|---|---|
| *A = First agent, B = Second agent *Specific gravity/Unit indicates specific gravity in Formulation, and units of various numerical values in others. | | | | | | | | |

The thermally conductive resin compositions in Examples 13 to 15 or Examples 16 to 17 above each containing an epoxy resin, an amine curing agent having three or more active hydrogen atoms of amino groups, and a thermally conductive filler and having an equivalent ratio (NH/Ep) of more than 1 and less than 2.7 were capable of exhibiting improved elongation while suppressing deterioration of adhesion to a resin material compared with Comparative Example 5 or Comparative Example 6 in which the same epoxy resin and amine curing agent were used, but the equivalent ratio (NH/Ep) was outside the range.

Examples 13 to 15 or Examples 16 to 17 did not contain an amine curing agent having two primary amino groups and one or more reactive amino groups per molecule and, on the other hand, contained a tri- or higher functional epoxy resin. Accordingly, when the ratio of the amine curing agent to the epoxy resin is lowered to increase the equivalent ratio (NH/Ep), components that readily form crosslinks are reduced. Thus, as the equivalent ratio (NH/EP ratio) is increased, the residual amino groups after reaction are also increased accordingly, and interactions with the adherend are strengthened due to the polarity caused by the residual amino groups, but the crosslinking density after curing is lowered. As a result, while adhesive strength could have possibly been decreased due to the decreased bulk strength, the adhesive strength was increased with a relatively low equivalent ratio (NH/EP ratio).

### Reference Signs List

- 10: Battery module
- 11, 21: Battery cell
- 12: Battery module housing (module housing)
- 13, 23: Gap filler
- 20: Battery assembly
- 25: Base member

## Claims

1. A thermally conductive resin composition comprising an epoxy resin, an amine curing agent having three or more active hydrogen atoms of amino group, and a thermally conductive filler, and having an equivalent ratio of active hydrogen atoms of amino group to epoxy groups of more than 1 and 2.7 or less.

2. The thermally conductive resin composition according to claim 1, wherein the amine curing agent has a primary amino group.

3. The thermally conductive resin composition according to claim 2, wherein the amine curing agent has two or more primary amino groups per molecule.

4. The thermally conductive resin composition according to claim 1, wherein the amine curing agent is an aliphatic amine.

5. The thermally conductive resin composition according to any one of claims 1 to 4, wherein the epoxy resin comprises an epoxy resin having an aromatic ring.

6. The thermally conductive resin composition according to any one of claims 1 to 4, wherein the epoxy resin comprises a polyfunctional epoxy resin and a monofunctional epoxy resin.

7. The thermally conductive resin composition according to any one of claims 1 to 4, wherein the thermally conductive filler has a filling rate of 50% by volume or more.

8. The thermally conductive resin composition according to any one of claims 1 to 4, wherein the thermally conductive filler is at least one of aluminum oxide or aluminum hydroxide.

9. The thermally conductive resin composition according to any one of claims 1 to 4, wherein
the thermally conductive filler comprises aluminum oxide and aluminum hydroxide, the aluminum oxide has a filling rate of 4% by volume or more and 50% by volume or less, and the aluminum hydroxide has a filling rate of 25% by volume or more and 86% by volume or less.

10. The thermally conductive resin composition according to any one of claims 1 to 4, wherein the epoxy resin has a molecular weight of 1000 or less, and the amine curing agent has a molecular weight of 3000 or less.

11. The thermally conductive resin composition according to any one of claims 1 to 4, which has the equivalent ratio of the active hydrogen atoms of amino group to the epoxy groups of 1.05 or more.

12. The thermally conductive resin composition according to any one of claims 1 to 4, which has the equivalent ratio of the active hydrogen atoms of amino group to the epoxy groups of 1.12 or more and 2.63 or less.

13. The thermally conductive resin composition according to any one of claims 1 to 4, which has the equivalent ratio of the active hydrogen atoms of amino group to the epoxy groups of 1.78 or less.

14. The thermally conductive resin composition according to any one of claims 1 to 4, comprising a first agent which comprises the epoxy resin and with which a first container is filled and a second agent which comprises the amine curing agent and with which a second container is filled.

15. A container set, which is filled with the thermally conductive resin composition according to claim 14, and comprises the first container filled with the first agent and the second container filled with the second agent.

16. A thermally conductive member formed of a cured product of the thermally conductive resin composition according to any one of claims 1 to 4.

17. A battery assembly comprising the thermally conductive member according to claim 16.
